# EUROPÄISCHE PATENTANMELDUNG

(11) **EP 2 916 271 A1**
(43) Veröffentlichungstag der Anmeldung: **09.09.2015**
(21) Anmeldenummer: 15155014.2
(22) Anmeldetag: 13.02.2015
(51) Int. Cl.: G06Q 10/06

(54) **Verfahren und System zur Qualitätssicherung von Servicedienstleistungen sowie Computerprogrammprodukt zur Durchführung des Verfahrens**

(30) Priorität: 05.03.2014 EP 14157876
(71) Anmelder: Dositrack GmbH, 22395 Hamburg (DE)
(72) Erfinder: Krüger, Sven, 22927 Großhansdorf (DE)
(74) Vertreter: Seemann & Partner

(57) **Zusammenfassung**

Verfahren und System (2, 30) zur Qualitätssicherung von an oder in einem Gebäude (4) erbrachten oder zu erbringenden Servicedienstleistungen, wobei das System (2, 30) eine Zentraleinheit (6), ein erstes mobiles Benutzerendgerät (8) umfasst, wobei ein Leistungsverzeichnis an dem ersten mobilen Benutzerendgerät (8) empfangen und bearbeitet wird, ein Bearbeitungsprotokoll erzeugt und an ein zweites Benutzerendgerät (24, 26) übertragen wird und ein personalisierter Login-Vorgang seitens des zweiten Benutzerendgeräts (24, 26) nur dann als erfolgreich bestätigt und abgeschlossen wird, wenn eine benutzerseitige Eingabe betreffend eine Bestätigung des Bearbeitungsprotokolls empfangen wird.

## Beschreibung

Die Erfindung betrifft ein Verfahren zur Qualitätssicherung von an oder in einem Gebäude oder einem Gebäudeabschnitt erbrachten oder zu erbringenden Servicedienstleistungen, wobei ein erstes mobiles Benutzerendgerät, umfassend ein erstes Speichermedium und eine Kommunikationseinheit, vorgesehen ist, wobei das Verfahren die folgenden Schritte umfasst:
a) Zuordnen von auf dem ersten Speichermedium vorhandenen gebäudespezifischen Daten zu einem für das Gebäude vorgesehenen Leistungsverzeichnis, welches Servicedienstleis-tungseinträge umfasst, die jeweils eine an dem Gebäude oder dem Gebäudeabschnitt zu erbringende Servicedienstleistung spezifizieren,
b) Empfangen von Benutzereingaben an dem ersten Benutzerendgerät, wobei die Benutzereingaben die in dem Leistungsverzeichnis vorhandenen Servicedienstleistungseinträge hinsichtlich eines Grades einer erfolgreichen Erledigung der zugehörigen Servicedienstleistung kennzeichnen,
c) Abspeichern eines bearbeiteten Leistungsverzeichnisses, umfassend die Servicedienstleistungseinträge und die den einzelnen Servicedienstleistungseinträgen zugeordneten Benutzereingaben, auf dem ersten Speichermedium des ersten Benutzerendgeräts
wobei ein zweites Benutzerendgerät mit einem zweiten Speichermedium und einer Kommunikationseinheit vorgesehen ist, wobei die Kommunikationseinheit des zweiten Benutzerendgeräts dazu eingerichtet ist, zumindest zeitweise eine Datenverbindung zu dem ersten Benutzerendgerät bereitzustellen, wobei
d) ein Bearbeitungsprotokoll in dem ersten Benutzerendgerät erzeugt wird und wobei
e) das Bearbeitungsprotokoll von dem ersten Benutzerendgerät an das zweite Benutzerendgerät übertragen und
f) auf dem zweiten Speichermedium des zweiten Benutzerendgeräts abgespeichert wird.

Ferner betrifft die Erfindung ein System zur Qualitätssicherung von an oder in einem Gebäude oder einem Gebäudeabschnitt erbrachten oder zu erbringenden Servicedienstleistungen, wobei in dem System ein erstes mobiles Benutzerendgerät, umfassend ein erstes Speichermedium und eine Kommunikationseinheit, vorgesehen ist, wobei das erste mobile Benutzerendgerät dazu eingerichtet ist,
a) auf dem ersten Speichermedium vorhandene gebäudespezifische Daten einem für das Gebäude vorgesehenen Leistungsverzeichnis, welches Servicedienstleistungseinträge umfasst, die jeweils eine an dem Gebäude oder dem Gebäudeabschnitt zu erbringende Servicedienstleistung spezifizieren, zuzuordnen,
b) Benutzereingaben, die die in dem Leistungsverzeichnis vorhandenen Servicedienstleistungseinträge hinsichtlich eines Grades einer erfolgreichen Erledigung der zugehörigen Servicedienstleistung kennzeichnen, zu empfangen,
c) ein bearbeitetes Leistungsverzeichnis, umfassend die Servicedienstleistungseinträge und die den einzelnen Servicedienstleistungseinträgen zugeordneten Benutzereingaben, auf dem ersten Speichermedium des ersten Benutzerendgeräts abzuspeichern.
wobei in dem System ein zweites Benutzerendgerät mit einem zweiten Speichermedium und einer Kommunikationseinheit vorgesehen ist, wobei die Kommunikationseinheit des zweiten Benutzerendgeräts dazu eingerichtet ist, zumindest zeitweise eine Datenverbindung zu dem ersten Benutzerendgerät bereitzustellen, wobei das erste Benutzerendgerät dazu eingerichtet ist,
d) ein Bearbeitungsprotokoll zu erzeugen, und
e) das Bearbeitungsprotokoll an das zweite Benutzerendgerät zu übertragen,
wobei das zweite Benutzerendgerät dazu eingerichtet ist,
f) das Bearbeitungsprotokoll auf dem zweiten Speichermedium abzuspeichern.

Schließlich betrifft die Erfindung ein Computerprogrammprodukt mit einem Computerprogramm, das Softwaremittel zur Durchführung eines Verfahrens umfasst.

Die Durchführung von Qualitätskontrollen von Servicedienstleistungen, insbesondere Reinigungsdienstleistungen, erlangt im Sinne der Leistungstransparenz und zunehmender Qualitätsstandards immer größere Bedeutung. Eine Qualitätsprüfung vor Ort, welche transparent anhand eines Leistungsverzeichnisses durchgeführt wird, schafft Vertrauen und erlaubt ein zielgerichtetes Verbesserungsmanagement.

Vorhandene Systeme zur Qualitätssicherung von Servicedienstleistungen beschränken sich vielfach auf eine Qualitätsprüfung bzw. Kontrolle nach der Durchführung der Dienstleistung.

US 2011/0010221 A1 ist ein System zur Qualitätskontrolle von Servicedienstleistungen zu entnehmen. Eine mit der Qualitätskontrolle beauftragte Person führt diese mithilfe eines drahtlosen Kommunikationsgerätes, beispielsweise einem PDA, durch. In einem ersten Schritt werden Daten und Spezifikationen eines Gebäudes oder das Arbeits- oder Reinigungsprogramm für dieses Gebäude von einem Server über eine drahtlose Datenverbindung heruntergeladen. Während der Kontrolle des Gebäudes notiert eine mit der Qualitätskontrolle beauftragte Person Mängel der an dem Gebäude erbrachten Dienstleistungen. Alle Mängel oder weiteren Punkte, die während dieser Begehung aufgefunden werden, werden an die mit dem Service beauftragte Firma oder einen Kunden weitergegeben. So ist sichergestellt, dass ein Mitarbeiter die notwendigen Aufgaben erfüllt.

Ausgehend von diesem Stand der Technik ist es eine Aufgabe der Erfindung, ein Verfahren und ein System zur Qualitätssicherung von an oder in einem Gebäude erbrachten oder zu erbringenden Servicedienstleistungen sowie ein Computerprogrammprodukt anzugeben, wobei eine verbesserte Qualitätssicherung und/oder eine gesteigerte Effizienz der erbrachten oder zu erbringenden Servicedienstleistungen erreicht werden soll.

Die erfindungsgemäße Aufgabe wird gelöst durch ein Verfahren zur Qualitätssicherung von an oder in einem Gebäude oder einem Gebäudeabschnitt erbrachten oder zu erbringenden Servicedienstleistungen, wobei ein erstes mobiles Benutzerendgerät, umfassend ein erstes Speichermedium und eine Kommunikationseinheit, vorgesehen ist, wobei das Verfahren die folgenden Schritte umfasst:
a) Zuordnen von auf dem ersten Speichermedium vorhandenen gebäudespezifischen Daten zu einem für das Gebäude vorgesehenen Leistungsverzeichnis, welches Servicedienstleistungseinträge umfasst, die jeweils eine an dem Gebäude oder dem Gebäudeabschnitt zu erbringende Servicedienstleistung spezifizieren,
b) Empfangen von Benutzereingaben an dem ersten Benutzerendgerät, wobei die Benutzereingaben die in dem Leistungsverzeichnis vorhandenen Servicedienstleistungseinträge hinsichtlich eines Grades einer erfolgreichen Erledigung der zugehörigen Servicedienstleistung kennzeichnen,
c) Abspeichern eines bearbeiteten Leistungsverzeichnisses, umfassend die Servicedienstleistungseinträge und die den einzelnen Servicedienstleistungseinträgen zugeordneten Benutzereingaben, auf dem ersten Speichermedium des ersten Benutzerendgeräts,
wobei ein zweites Benutzerendgerät mit einem zweiten Speichermedium und einer Kommunikationseinheit vorgesehen ist, wobei die Kommunikationseinheit des zweiten Benutzerendgeräts dazu eingerichtet ist, zumindest zeitweise eine Datenverbindung zu dem ersten Benutzerendgerät bereitzustellen, wobei
d) ein Bearbeitungsprotokoll in dem ersten Benutzerendgerät erzeugt wird und wobei
e) das Bearbeitungsprotokoll von dem ersten Benutzerendgerät an das zweite Benutzerendgerät übertragen und
f) auf dem zweiten Speichermedium des zweiten Benutzerendgeräts abgespeichert wird
wobei das Verfahren dadurch fortgebildet ist, dass
das zweite Benutzerendgerät Benutzerkenndaten im Rahmen eines personalisierten Login-Vorgangs, insbesondere zum Zweck einer Arbeitszeiterfassung, empfängt, wobei der Login-Vorgang seitens des zweiten Benutzerendgeräts nur dann als erfolgreich bestätigt und abgeschlossen wird, wenn eine benutzerseitige Eingabe betreffend eine Bestätigung des Bearbeitungsprotokolls empfangen wird.

Eine Bestätigung des Bearbeitungsprotokolls seitens einer Serviceperson bindet diese direkt in den Prozess der Qualitätsverbesserung ein. Bei dem zweiten Benutzerendgerät handelt es sich beispielsweise um ein mobiles Benutzerendgerät, welches die Servicekraft insbesondere mit sich führt. Ebenso ist jedoch vorgesehen, dass das zweite Benutzerendgerät ein ortsfestes Benutzerterminal ist. In beiden Fällen erlaubt diese Maßnahme vorteilhaft, die mit der Durchführung der Servicearbeiten betrauten Personen für die Qualität ihrer Arbeit zu sensibilisieren und somit die Qualität der Dienstleistungen insgesamt nachhaltig zu steigern. Die Verbindung zwischen einer Wiedergabe des Bearbeitungsprotokolls und dessen verbindlicher Bestätigung im Moment der Arbeitszeiterfassung führt zu einer hohen Aufmerksamkeit und Motivation bei der Wahrnehmung des Bearbeitungsprotokolls.

Der Erfindung liegt ferner die Erkenntnis zugrunde, dass durch Einbeziehung des Servicepersonals in den Prozess der Qualitätsprüfung und Qualitätssicherung die Effizienz und Qualität der erbrachten Servicedienstleistungen gesteigert werden kann. Das im Rahmen der Qualitätskontrolle erstellte Bearbeitungsprotokoll liegt auf dem zweiten Benutzerendgerät vor, und gelangt so einer Serviceperson direkt zur Kenntnis. Das zweite Benutzerendgerät ist beispielsweise ein mobiles Benutzerendgerät, welches die Servicekraft insbesondere mit sich führt, oder auch ein ortsfestes Benutzerterminal. Vorteilhaft erfolgt die Kommunikation des Bearbeitungsprotokolls vollständig auf elektronischem Wege und direkt ausgehend von dem ersten Benutzerendgerät, welches insbesondere von einer mit der Kontrolle beauftragten weiteren Serviceperson, beispielsweise einem Objektleiter, mitgeführt wird. Ein weiterer Vorteil besteht in der verbesserten Erreichbarkeit des Servicepersonals. Das Problem, dass Reinigungskräfte vielfach schwer oder gar nicht erreichbar sind, so dass Mängel über mehrere Tage nicht kommuniziert werden können, wird behoben.

Gemäß einer vorteilhaften Weiterbildung ist vorgesehen, dass das Bearbeitungsprotokoll allgemeine Hinweise umfasst und/oder in das Bearbeitungsprotokoll ausgehend von dem bearbeiteten und abgespeicherten Leistungsverzeichnis die als zumindest zu einem vorgebbaren Grad als nicht erledigt gekennzeichneten Servicedienstleistungseinträge übernommen werden.

Mit anderen Worten ist im Kontext der vorliegenden Beschreibung unter dem Begriff "Bearbeitungsprotokoll" sowohl ein allgemeiner Hinweis als auch eine konkrete Arbeitsanweisung an den Benutzer des zweiten Benutzerendgerätes zu verstehen. Ein allgemeiner Hinweis ist beispielsweise: "Die Servicekraft möge bitte frisch gereinigte Kleidung anlegen". Eine konkrete Arbeitsanweisung ergibt sich aus der Differenz zwischen den Einträgen in dem Leistungsverzeichnis und den beispielsweise im Rahmen einer Begehung als auch tatsächlich erledigt angesehenen Leistungen. Der Benutzer des zweiten Benutzerendgerätes wird also konkret darauf hingewiesen, welche Leistungen noch zu erbringen oder nachzubessern sind.

Gemäß einer Ausführungsform ist vorgesehen, dass ferner eine Zentraleinheit mit einem zentralen Speichermedium und einer Kommunikationseinheit vorgesehen ist, wobei die Kommunikationseinheit der Zentraleinheit und die Kommunikationseinheit des ersten Benutzerendgeräts dazu eingerichtet sind, zumindest zeitweise eine Datenverbindung zwischen der Zentraleinheit und dem ersten Benutzerendgerät bereitzustellen, wobei das Verfahren ferner die folgenden Schritte umfasst:
a) Übertragen von gebäudespezifischen Daten von dem ersten Benutzerendgerät an die Zentraleinheit,
b) Zuordnen der gebäudespezifischen Daten zu einem für das Gebäude vorgesehenen Leistungsverzeichnis in der Zentraleinheit, wobei das Leistungsverzeichnis auf dem zentralen Speichermedium der Zentraleinheit vorhanden ist,
c) Übertragen des Leistungsverzeichnisses von der Zentraleinheit an das erste Benutzerendgerät,
d) Abspeichern des Leistungsverzeichnisses auf dem ersten Speichermedium des ersten Benutzerendgeräts,
insbesondere
e) Übertragen des Bearbeitungsprotokolls von dem ersten Benutzerendgerät an die Zentraleinheit,
f) Speichern des Bearbeitungsprotokolls auf dem zentralen Speichermedium der Zentraleinheit,
g) Übertragen des Bearbeitungsprotokolls von der Zentraleinheit an das zweite Benutzerendgerät.

Vorteilhaft wird das Leistungsverzeichnis auf der Zentraleinheit vorgehalten und steht so einer Vielzahl verschiedener Benutzerendgeräte zur Verfügung. Die Notwendigkeit, das Benutzerendgerät mit der Zentraleinheit über eine drahtgebundene Datenverbindung zu synchronisieren, entfällt.

Ferner liegt insbesondere das Ergebnis der Qualitätskontrolle, nämlich das Bearbeitungsprotokoll, zum Zweck der Dokumentation und Analyse auch in der Zentraleinheit vor. Insbesondere in einem Szenario, in welchem eine Vielzahl erster und zweiter Benutzerendgeräte zur Betreuung einer Vielzahl von Gebäuden eingesetzt werden, ist es möglich, einen raschen und effizienten Überblick über die Qualität der an den verschiedenen Gebäuden erbrachten Servicedienstleistungen zu erlangen.

Ferner ist das Verfahren insbesondere dadurch fortgebildet, dass an oder in dem Gebäude oder dem Gebäudeabschnitt ein maschinenlesbares Kennzeichnungsmerkmal vorgesehen ist, welches gebäudespezifische Daten zur Identifizierung des Gebäudes oder Gebäudeabschnitts umfasst, wobei mit dem ersten Benutzerendgerät das Kennzeichnungsmerkmal erfasst und die gebäudespezifischen Daten ausgelesen werden, wobei ein erster Zeitpunkt dieser ersten Erfassung des Kennzeichnungsmerkmals durch das erste Benutzerendgerät erfasst und auf einem ersten Speichermedium des ersten Benutzerendgeräts abgespeichert wird, wobei das Kennzeichnungsmerkmal nach Empfang der Benutzereingaben an dem ersten Benutzerendgerät mit dem ersten Benutzerendgerät erneut erfasst und ausgelesen wird, wobei das erste Benutzerendgerät einen zweiten Zeitpunkt der erneuten Erfassung des Kennzeichnungsmerkmals in dem ersten Speichermedium abspeichert und wobei das erste Benutzerendgerät erste Daten betreffend den ersten Zeitpunkt, insbesondere eine erste Uhrzeit und ein erstes Datum des ersten Zeitpunkts, und zweite Daten betreffend den zweiten Zeitpunkt, insbesondere eine zweite Uhrzeit und ein zweites Datum des zweiten Zeitpunkts, an die Zentraleinheit überträgt.

Die Erfassung des ersten und zweiten Zeitpunkts, welcher die Zeitspanne zwischen der ersten und zweiten Erfassung des Kennzeichnungsmerkmals an dem Gebäude kennzeichnet, erlaubt eine Überwachung der Zeit, die eine mit der Qualitätskontrolle beauftragte Serviceperson für die Qualitätskontrolle benötigt hat. Durch die Übertragung dieser Information an die Zentraleinheit, liegen nicht nur Informationen betreffend die die Servicedienstleitungen durchführenden Personen, sondern ebenso Informationen über die die Servicedienstleistungen überwachenden und kontrollierenden Personen vor. Besonders vorteilhaft ist diese Funktionalität erneut in einem Szenario, in welchem eine Vielzahl von Gebäuden betreut und kontrolliert wird.

Gemäß einer Weiterbildung des erfindungsgemäßen Verfahrens ist vorgesehen, dass das zweite Benutzerendgerät Benutzerkenndaten im Rahmen eines personalisierten Logout-Vorgangs, insbesondere zum Zweck einer Arbeitszeiterfassung, empfängt, wobei der Logout-Vorgang seitens des zweiten Benutzerendgeräts nur dann als erfolgreich bestätigt und abgeschlossen wird, wenn eine benutzerseitige Eingabe, betreffend eine Erledigung der in dem Bearbeitungsprotokoll vorhandenen Servicedienstleistungseinträge empfangen wird.

Eine Bestätigung der erfolgreichen Erledigung der in dem Bearbeitungsprotokoll vorhandenen Servicedienstleistungseinträge im Rahmen eines Logout-Vorgangs verringert das Risiko, dass eine unvollständige Bearbeitung der in dem Bearbeitungsprotokoll vorhandenen Servicedienstleistungseinträge durchgeführt wird. Auch diese Maßnahme bedingt vorteilhaft eine langfristige Qualitätssteigerung der erbrachten Dienstleistungen.

Gemäß einer weiteren Ausführungsform ist vorgesehen, dass das zweite Benutzerendgerät eine Positionserfassungseinheit, insbesondere einen GPS-Empfänger, umfasst, wobei im Rahmen des personalisierten Login- und/oder Logout-Vorgangs Ortsdaten des zweiten Benutzerendgeräts erfasst und insbesondere in dem zweiten Speichermedium abgespeichert werden, wobei insbesondere ferner die erfassten Ortsdaten an das erste Benutzerendgerät und/oder an eine Zentraleinheit übertragen werden.

Bevorzugt wird die Erfassung der Ortsdaten in dem Moment durchgeführt, in dem der Login- und/oder der Logout-Vorgang beendet wird. Selbstverständlich ist es möglich, die Ortsdaten auch zu einem anderen Zeitpunkt während des Login- bzw. Logout-Vorgangs zu erfassen. Beispielsweise werden die Ortsdaten zu Beginn des Login- oder Logout-Vorgangs erfasst, in dem Moment, in dem eine Person beispielsweise ihre persönliche Kennung, wie ihren Namen, Login oder ihre Personalnummer, eingibt.

Bei dem zweiten Benutzerendgerät handelt es sich insbesondere um ein mobiles Benutzerendgerät, beispielsweise um ein Smartphone oder ein PDA.

Vorteilhaft ist es, mithilfe des Verfahrens gemäß der genannten Ausführungsform möglich festzustellen, an welchem Ort sich die Person zum Zeitpunkt des Login- und/oder Logout-Vorgangs befindet. Beispielsweise kann überprüft werden, ob die Person sich im Moment, in dem die Arbeitszeiterfassung gestartet wird, auch tatsächlich an ihrem Arbeitsplatz befindet.

Gemäß einer weiteren vorteilhaften Ausführungsform ist das Verfahren ferner dadurch fortgebildet, dass gemeinsam mit dem Bearbeitungsprotokoll Ortsdaten des Gebäudes oder des Gebäudeabschnitts an das zweite Benutzerendgerät übertragen und in dem zweiten Speichermedium abgespeichert werden, wobei die von dem zweiten Benutzerendgerät erfassten Ortsda-ten mit den Ortsdaten des Gebäudes oder des Gebäu-deabschnitts verglichen und eine Abweichung bestimmt werden und der Login- und/oder Logout-Vorgang nur dann als erfolgreich und bestätigt und abgeschlossen wird, wenn die Abweichung geringer als ein vorgegebener Grenzwert ist.

Ist der Abstand zwischen den Ortsdaten des Gebäudes oder des Gebäudeabschnitts und den erfassten Ortsdaten größer als der Grenzwert, wird der Login verweigert. Vorteilhaft ist es durch einen Vergleich der Ortsdaten des Gebäudes oder Gebäudeabschnitts mit den erfassten Ortsdaten möglich, mit einiger Zuverlässigkeit sicherzustellen, dass die beauftragte Person sich tatsächlich auch an ihrem Arbeitsplatz befindet, wenn die den Login-Vorgang durchführt.

Im Rahmen eines Login-Vorgangs ist insbesondere vorgesehen, dass eine Person zuerst eine persönliche Kennung, beispielsweise einen frei wählbaren Benutzernamen, ihren realen bürgerlichen Namen, eine Personalnummer oder dergleichen, an dem zweiten Benutzerendgerät eingibt. Anschließend wird, insbesondere auch optional, ein Code, beispielsweise ein PIN-Code, abgefragt, anhand dessen es möglich ist, die Person eindeutig zu identifizieren. Alternativ ist ein berührungsloser Login möglich, beispielsweise unter Verwendung einer mit einem RFID-Tag versehenen Personalkarte und eines in dem zweiten Benutzerendgerät vorgesehenen RFID-Transponders. Weitere Möglichkeiten zur Identifizierung der mit dem Login-Vorgang befassten Person, beispielsweise durch Erfassung eines Fingerabdruck-Scans oder dergleichen, sind ebenfalls zur Authentifizierung bzw. Identitätsüberprüfung möglich.

Anschließend wird bei einem Login-Vorgang der Serviceperson das Bearbeitungsprotokoll zur Kenntnis gebracht, indem es beispielsweise auf einer Anzeige des zweiten Benutzerendgerätes angezeigt oder in Form einer Audiobotschaft, ausgegeben wird. Erst wenn dieses Bearbeitungsprotokoll, beispielsweise durch Bestätigung einer O.K.-Taste oder durch Setzten von einem oder mehreren Haken in Bestätigungsboxen bestätigt wird, wird der Login-Vorgang abgeschlossen und die Arbeitszeiterfassung gestartet. Hierbei ist vorgesehen, dass das Bearbeitungsprotokoll im Ganzen oder Punkt für Punkt bestätigt wird. Im letzteren Fall wird die Serviceperson gezwungen, jeden einzelnen in dem Bearbeitungsprotokoll verzeichneten Mangel einzeln zur Kenntnis zu nehmen und ebenfalls einzeln zu bestätigen, dass diese behoben werden. Dies erleichtert die Nachweisführung gegenüber der Servicekraft, falls nicht alle Mängel behoben werden und schafft außerdem einen hohen Grad an Verbindlichkeit, die aufgeführten Mängel auch tatsächlich zu beseitigen. Die ab dem Moment der vollständigen Bestätigung laufende Zeit wird dem Arbeitszeitkonto der Servicekraft gutgeschrieben. Anschließend wird der Login-Vorgang beispielsweise als erfolgreich bestätigt, indem auf einer Anzeige des zweiten Benutzerendgeräts dem Benutzer eine entsprechende Mitteilung zur Kenntnis gebracht wird, dass dieser nun im System eingeloggt ist. Weitere Möglichkeiten zur Bestätigung, beispielsweise durch ein Audiosignal, sind ebenfalls möglich.

Erst nach einem solchen erfolgreich durchgeführten Login-Vorgang stehen die Funktionen des Systems dem Benutzer zur Verfügung.

Gemäß einer weiteren Ausführungsform ist das Verfahren dadurch fortgebildet, dass eine Basisstation und eine mobile Serviceassistenzeinheit vorgesehen sind, wobei die Serviceassistenzeinheit eine Positionserfassungseinheit, insbesondere einen GPS-Empfänger, eine Kommunikationseinheit und ein Speichermedium umfasst, und wobei die Basisstation eine Kommunikationseinheit und ein Speichermedium umfasst, wobei die Kommunikationseinheit der Basisstation und der Serviceassistenzeinheit jeweils dazu eingerichtet sind, zumindest zeitweise eine Datenverbindung zwischen der Serviceassistenzeinheit und der Basisstation bereitzustellen, wobei die Positionserfassungseinheit der Serviceassistenzeinheit zeitabhängig Ortsdaten der Serviceassistenzeinheit erfasst, die erfassten Ortsdaten einschließlich der zugehörigen Zeitdaten an die Basisstation sendet, die Basisstation und/oder die Serviceassistenzeinheit einen Stand-by-Zustand der Serviceassistenzeinheit erkennt und die Basisstation und/oder die Serviceassistenzeinheit Benutzerkenndaten im Rahmen eines personalisierten Login-Vorgangs, insbesondere zum Zweck einer Arbeitszeiterfassung, empfängt bzw. empfangen, wobei der Login-Vorgang seitens der Basisstation und/oder seitens der Serviceassistenzeinheit nur dann als erfolgreich bestätigt und abgeschlossen wird, wenn ein Stand-by-Zustand der Serviceassistenzeinheit beendet und die Serviceassistenzeinheit zur Erfassung von Ortsdaten und zugehörigen Zeitdaten aktiviert wird.

Vorteilhaft ist das Verfahren zur Qualitätssicherung in hohem Maße manipulationssicher, denn eine Erfassung der geleisteten Arbeitszeit ist nur möglich, wenn auch die Serviceassistenzeinheit zur Erfassung von Ortsdaten in Betrieb genommen wird. Anhand der zeitabhängig erfassten Ortsdaten ist eine Rekonstruktion des Servicevorgangs möglich, so dass die tatsächliche Durchführung überprüft und die Qualität der Durchführung abgeschätzt werden kann.

Die Erkennung eines Stand-by-Zustands der Serviceassistenzeinheit erfolgt beispielsweise durch eine zwischen der Basisstation und der Serviceassistenzeinheit vorhandene drahtgebundene Verbindung. Anhand einer solchen Verbindung ist beispielsweise erkennbar, dass die Serviceassistenzeinheit an der Basisstation angedockt ist. Gemäß einer weiteren Ausführungsform wird die Gegenwart der Serviceassistenzeinheit an der Basisstation über eine NFCSchnittstelle erkannt. Eine Datenkommunikation zwischen der Serviceassistenzeinheit und der Basisstation erfolgt drahtlos oder drahtgebunden.

Das Verfahren ist insbesondere dadurch fortgebildet, dass die Basisstation die Ortsdaten einschließlich der zugehörigen Zeitdaten in einem für die Serviceassistenzeinheit spezifischen Datensatz auf dem Speichermedium speichert, auf dem Speichermedium der Basisstation Ortsdaten einer vorgegebenen Serviceroute vorhanden sind und die Basisstation den für die Serviceassistenzeinheit spezifischen Datensatz einer Auswertung zugänglich macht, die insbesondere einen Vergleich der für die Serviceassistenzeinheit spezifischen Ortsdaten mit den Ortsdaten der Serviceroute umfasst.

Die Abarbeitung einer Serviceroute ist die effizienteste Möglichkeit zur Erledigung der Servicedienstleistungen. Die Einhaltung der optimierten Serviceroute steigert die Effizienz der Durchführung der Servicedienstleistungen. Vorteilhaft ist so eine Effizienz der Durchführung der Servicedienstleistungen abschätzbar. Ferner ist es möglich, die Serviceroute anhand der vorliegenden Ortsdaten und eines Vergleichs mit der aktuellen Serviceroute zu optimieren.

Eine Auswertung der Serviceroute erfolgt wahlweise in der Basisstation oder in einer Zentraleinheit. Im letzteren Fall werden die erfassten Ortsdaten einschließlich der Serviceroute an eine Zentraleinheit kommuniziert, so dass diese dort ausgewertet werden können.

Gemäß einer weiteren Ausführungsform ist vorgesehen, dass die Basisstation und/oder die Serviceassistenzeinheit Benutzerkenndaten im Rahmen eines personalisierten Logout-Vorgangs, insbesondere zum Zweck einer Arbeitszeiterfassung, empfängt bzw. empfangen, wobei der Logout-Vorgang seitens der Basisstation und/oder der Serviceassistenzeinheit nur dann als erfolgreich bestätigt und abgeschlossen wird, wenn die drahtgebundene Verbindung zwischen der Basisstation und der Serviceassistenzeinheit nach Eingabe der Logout-Daten hergestellt wird, wobei insbesondere die zeitabhängig erfassten Ortsdaten von der Serviceassistenzeinheit an die Basisstation über die drahtgebundene Verbindung gesendet werden.

Vorteilhaft ist bei dem Verfahren gemäß dieser Ausführungsform sichergestellt, dass die erfassten Ortsdaten auch tatsächlich einer Auswertung zugänglich werden. Der bedingte Logout-Vorgang erzwingt eine Verbindung der Serviceassistenzeinheit mit der Basisstation, so dass die erfassten Ortsdaten übertragen werden können.

Gemäß einer weiteren Ausführungsform ist vorgesehen, dass das Verfahren dadurch fortgebildet ist, dass eine Basisstation und ein, insbesondere handgeführtes, Reinigungsgerät vorgesehen sind, wobei das Reinigungsgerät eine Positionserfassungseinheit, insbesondere einen GPS-Empfänger, eine Kommunikationseinheit und ein Speichermedium umfasst und wobei die Basisstation eine Kommunikationseinheit und ein Speichermedium umfasst, wobei die Kommunikationseinheit der Basisstation und der Serviceassistenzeinheit jeweils dazu eingerichtet sind, zumindest zeitweise eine Datenverbindung zwischen der Serviceassistenzeinheit und der Basisstation bereitzustellen, wobei die Positionserfassungseinheit des Reinigungsgeräts zeitabhängig Ortsdaten des Reinigungsgeräts erfasst und abspeichert, wobei die erfassten Ortsdaten einschließlich der zugehörigen Zeitdaten an die Basisstation, insbesondere zeitverzögert, gesendet werden.

Die erfindungsgemäße Aufgabe wird ferner gelöst durch ein System zur Qualitätssicherung von an oder in einem Gebäude oder einem Gebäudeabschnitt erbrachten oder zu erbringenden Servicedienstleistungen, wobei in dem System ein erstes mobiles Benutzerendgerät, umfassend ein erstes Speichermedium und eine Kommunikationseinheit, vorgesehen ist, wobei das erste mobile Benutzerendgerät dazu eingerichtet ist,
a) auf dem ersten Speichermedium vorhandene gebäudespezifischen Daten einem für das Gebäude vorgesehenen Leistungsverzeichnis, welches Servicedienstleistungseinträge umfasst, die jeweils eine an dem Gebäude oder dem Gebäudeabschnitt zu erbringende Servicedienstleistung spezifizieren, zuzuordnen,
b) Benutzereingaben, die die in dem Leistungsverzeichnis vorhandenen Servicedienstleistungseinträge hinsichtlich eines Grades einer erfolgreichen Erledigung der zugehörigen Servicedienstleistung kennzeichnen, zu empfangen,
c) ein bearbeitetes Leistungsverzeichnis, umfassend die Servicedienstleistungseinträge und die den einzelnen Servicedienstleistungseinträgen zugeordneten Benutzereingaben, auf dem ersten Speichermedium des ersten Benutzerendgeräts abzuspeichern,
wobei in dem System ein zweites Benutzerendgerät mit einem zweiten Speichermedium und einer Kommunikationseinheit vorgesehen ist, wobei die Kommunikationseinheit des zweiten Benutzerendgeräts dazu eingerichtet ist, zumindest zeitweise eine Datenverbindung zu dem ersten Benutzerendgerät bereitzustellen, wobei das erste Benutzerendgerät dazu eingerichtet ist,
d) ein Bearbeitungsprotokoll zu erzeugen, und
e) das Bearbeitungsprotokoll an das zweite Benutzerendgerät zu übertragen,
wobei das zweite Benutzerendgerät dazu eingerichtet ist,
f) das Bearbeitungsprotokoll auf dem zweiten Speichermedium abzuspeichern
und wobei das System dadurch fortgebildet ist, dass
das zweite Benutzerendgerät dazu eingerichtet ist, Benutzerkenndaten im Rahmen eines personalisierten Login-Vorgangs, insbesondere zum Zweck einer Arbeitszeiterfassung, zu empfangen, und wobei das zweite Benutzerendgerät dazu eingerichtet ist, den Login-Vorgang dann erfolgreich zu bestätigen und abzuschließen, wenn eine benutzerseitige Eingabe, betreffend eine Bestätigung des Bearbeitungsprotokolls empfangen wird.

Auch dem erfindungsgemäßen System zur Qualitätssicherung liegt die Erkenntnis zugrunde, dass eine Bestätigung des Bearbeitungsprotokolls seitens der Serviceperson sehr vorteilhaft ist, da diese direkt in dem Prozess der Qualitätsverbesserung bzw. Qualitätssicherung eingebunden wird. Die Verbindung zwischen einer Wiedergabe des Bearbeitungsprotokolls und dessen verbindlicher Bestätigung im Moment der Arbeitszeiterfassung führt zu einer hohen Aufmerksamkeit und Motivation bei der Wahrnehmung des Bearbeitungsprotokolls.

Vorteilhaft ist das System dadurch fortgebildet, dass das Bearbeitungsprotokoll allgemeine Hinweise umfasst und/oder in das Bearbeitungsprotokoll ausgehend von dem bearbeiteten und abgespeicherten Leistungsverzeichnis die zumindest zu einem vorgebbaren Grad als nicht erledigt gekennzeichneten Servicedienstleistungseinträge übernommen werden.

Erneut ist im Kontext der vorliegenden Beschreibung unter dem Begriff "Bearbeitungsprotokoll" sowohl ein allgemeiner Hinweis als auch eine konkrete Arbeitsanweisung an den Benutzer des zweiten Benutzerendgerätes zu verstehen.

Insbesondere ist das System dadurch fortgebildet, dass ferner eine Zentraleinheit mit einem zentralen Speichermedium und einer Kommunikationseinheit vorgesehen ist, wobei die Kommunikationseinheit der Zentraleinheit und die Kommunikationseinheit des ersten Benutzerendgeräts dazu eingerichtet sind, zumindest zeitweise eine Datenverbindung zwischen der Zentraleinheit und dem ersten Benutzerendgerät bereitzustellen, wobei das erste Benutzerendgerät dazu eingerichtet ist,
a) gebäudespezifische Daten an die Zentraleinheit zu übertragen, wobei die Zentraleinheit dazu eingerichtet ist,
b) den gebäudespezifischen Daten ein für das Gebäude vorgesehenes Leistungsverzeichnis, welches auf dem zentralen Speichermedium der Zentraleinheit vorhanden ist, zuzuordnen,
c) das Leistungsverzeichnis an das erste Benutzerendgerät zu übertragen,
wobei das erste Benutzerendgerät dazu eingerichtet ist,
d) das Leistungsverzeichnis auf dem ersten Speichermedium abzuspeichern,
und insbesondere
e) das Bearbeitungsprotokoll an die Zentraleinheit zu übertragen, wobei die Zentraleinheit dazu eingerichtet ist,
f) das Bearbeitungsprotokoll auf dem zentralen Speichermedium der Zentraleinheit zu speichern,
g) das Bearbeitungsprotokoll an das zweite Benutzerendgerät zu übertragen.

Gemäß einer weiteren Ausführungsform ist vorgesehen, dass das zweite Benutzerendgerät ein zweites mobiles Benutzerendgerät oder eine in dem Gebäude oder dem Gebäudeabschnitt vorgesehene stationäre Servicestation ist.

Ferner ist das System dadurch fortgebildet, dass an oder in dem Gebäude oder dem Gebäudeabschnitt ein maschinenlesbares Kennzeichnungsmerkmal vorgesehen ist, welches gebäudespezifische Daten zur Identifizierung des Gebäudes oder Gebäudeabschnitts umfasst, wobei das erste Benutzerendgerät dazu eingerichtet ist, das Kennzeichnungsmerkmal zu erfassen und die gebäudespezifischen Daten auszulesen, wobei das erste Benutzerendgerät ferner dazu eingerichtet ist, einen ersten Zeitpunkt dieser ersten Erfassung des Kennzeichnungsmerkmals durch das erste Benutzerendgerät zu erfassen und auf einem ersten Speichermedium des ersten Benutzerendgeräts abzuspeichern, und wobei das erste Benutzerendgerät ferner dazu eingerichtet ist, das Kennzeichnungsmerkmal nach Empfang der Benutzereingaben an dem ersten Benutzerendgerät erneut zu erfassen und auszulesen, wobei das erste Benutzerendgerät dazu eingerichtet ist, einen zweiten Zeitpunkt der erneuten Erfassung des Kennzeichnungsmerkmals in dem ersten Speichermedium abzuspeichern, und wobei das erste Benutzerendgerät dazu eingerichtet ist, erste Daten betreffend den ersten Zeitpunkt, insbesondere eine erste Uhrzeit und ein erstes Datum des ersten Zeitpunkts, und zweite Daten betreffend den zweiten Zeitpunkt, insbesondere eine zweite Uhrzeit und ein zweites Datum des zweiten Zeitpunkts, an die Zentraleinheit zu übertragen.

Ferner ist das System insbesondere dadurch fortgebildet, dass das zweite Benutzerendgerät dazu eingerichtet ist, Benutzerkenndaten im Rahmen eines personalisierten Logout-Vorgangs, insbesondere zum Zweck einer Arbeitszeiterfassung, zu empfangen, wobei das zweite Benutzerendgerät dazu eingerichtet ist, den Logout-Vorgang dann erfolgreich zu bestätigen und abzuschließen, wenn eine benutzerseitige Eingabe, betreffend eine Erledigung der in dem Bearbeitungsprotokoll vorhandenen Servicedienstleistungseinträge, empfangen wird.

Gemäß einer weiteren Ausführungsform ist das System dadurch fortgebildet, dass das zweite Benutzerendgerät eine Positionserfassungseinheit, insbesondere einen GPS-Empfänger, umfasst, wobei das zweite Benutzerendgerät dazu eingerichtet ist, im Rahmen des personalisierten Login- und/oder Logout-Vorgangs Ortsdaten des zweiten Benutzerendgeräts zu erfassen und insbesondere in dem zweiten Speichermedium des zweiten Benutzerendgeräts abzuspeichern. Ferner ist das zweite Benutzerendgerät insbesondere dazu eingerichtet, die erfassten Ortsdaten an das erste Benutzerendgerät und/oder an eine Zentraleinheit zu übertragen.

Das System ist ferner bevorzugt dadurch fortgebildet, dass das System zur Qualitätssicherung dazu eingerichtet ist, gemeinsam mit dem Bearbeitungsprotokoll Ortsdaten des Gebäudes oder des Gebäudeabschnitts an das zweite Benutzerendgerät zu übertragen. Das zweite Benutzerendgerät ist insbesondere dazu eingerichtet, diese Ortsdaten in dem zweiten Speichermedium abzuspeichern. Ferner ist bevorzugt vorgesehen, dass das zweite Benutzerendgerät dazu eingerichtet ist, die von diesen erfassten Ortsdaten mit den Ortsdaten des Gebäudes oder des Gebäudeabschnitts zu vergleichen und eine Abweichung zu bestimmen und den Login- und/oder Logout-Vorgang nur dann erfolgreich zu bestätigen und abzuschließen, wenn die Abweichung geringer als ein vorgegebener Grenzwert ist.

Vorteilhaft ist ein solches System in der Lage festzustellen, ob eine Person, die einen Login-Vorgang durchführt, sich tatsächlich auch an dem vorgesehenen Arbeitsplatz befindet. Weitere Vorteile sind bereits im Hinblick auf das Verfahren zur Qualitätssicherung erwähnt.

Gemäß einer weiteren Ausführungsform ist das System zur Qualitätssicherung von Servicedienstleistungen, insbesondere von an oder in einem Gebäude oder Gebäudeabschnitt erbrachten oder zu erbringenden Servicedienstleistungen, dadurch fortgebildet, dass eine Basisstation und eine mobile Serviceassistenzeinheit vorgesehen sind, wobei die Serviceassistenzeinheit eine Positionserfassungseinheit, insbesondere einen GPS-Empfänger, eine Kommunikationseinheit und ein Speichermedium umfasst und wobei die Basisstation eine Kommunikationseinheit und ein Speichermedium umfasst, wobei die Kommunikationseinheit der Basisstation und der Serviceassistenzeinheit jeweils dazu eingerichtet sind, zumindest zeitweise eine Datenverbindung zwischen der Serviceassistenzeinheit und der Basisstation bereitzustellen, wobei die Positionserfassungseinheit der Serviceassistenzeinheit dazu eingerichtet ist, zeitabhängig Ortsdaten der Serviceassistenzeinheit zu erfassen und die erfassten Ortsdaten einschließlich der zugehörigen Zeitdaten abzuspeichern und insbesondere zeitversetzt an die Basisstation zu senden, und wobei die Basisstation und/oder die Serviceassistenzeinheit dazu eingerichtet ist bzw. sind, einen Stand-by-Zustand der Serviceassistenzeinheit zu erkennen, Benutzerkenndaten im Rahmen eines personalisierten Login-Vorgangs, insbesondere zum Zweck einer Arbeitszeiterfassung, zu empfangen und den Login-Vorgang nur dann als erfolgreich zu bestätigen und abzuschließen, wenn ein Stand-by-Zustand der Serviceassistenzeinheit beendet und die Serviceassistenzeinheit zur Erfassung von Ortsdaten und zugehörigen Zeitdaten aktiviert wird.

Gemäß einer Weiterbildung des Systems wird in ähnlicher Weise ein Logout-Vorgang nur dann als erfolgreich bestätigt, wenn die Serviceassistenzeinheit mit der Basisstation eine Datenverbindung herstellt und die erfassten Orts- und Zeitdaten an die Basisstation übertragen werden.

Eine weitere Ausführungsform sieht vor, dass das System dadurch fortgebildet ist, dass eine Basisstation und ein, insbesondere handgeführtes, Reinigungsgerät, vorgesehen sind, wobei das Reinigungsgerät eine Positionserfassungseinheit, insbesondere einen GPS-Empfänger, eine Kommunikationseinheit und ein Speichermedium umfasst und wobei die Basisstation eine Kommunikationseinheit und ein Speichermedium umfasst, wobei die Kommunikationseinheiten der Basisstation und der Serviceassistenzeinheit jeweils dazu eingerichtet sind, zumindest zeitweise eine Datenverbindung zwischen der Serviceassistenzeinheit und der Basisstation bereitzustellen, wobei die Positionserfassungseinheit des Reinigungsgeräts dazu eingerichtet ist, zeitabhängig Ortsdaten des Reinigungsgeräts zu erfassen und abzuspeichern und die erfassten Ortsdaten einschließlich der zugehörigen Zeitdaten an die Basisstation zu übertragen.

Die Positionserfassungseinheit ist insbesondere als Daten-Logger eingerichtet. Mit anderen Worten erfasst diese fortlaufend zeitabhängig Ortsdaten und speichert diese in einem internen Speicher. Sobald eine Datenverbindung mit der Basisstation hergestellt ist, werden die aufgezeichneten Ortsdaten an die Basisstation übertragen. Gemäß einer weiteren Ausführungsform ist die Kommunikationseinheit des Reinigungsgerätes dazu eingerichtet, die von der Positionserfassungseinheit erfassten Ortsdaten fortlaufend an die Basisstation zu übertragen. Diese Datenübertragung erfolgt insbesondere über eine drahtlose Datenübertragungsstrecke.

Gleiche oder ähnliche Vorteile, die im Hinblick auf das zuvor genannte Verfahren erwähnt sind, treffen in gleicher oder ähnlicher Weise auch auf das System zur Qualitätssicherung zu, und sollen daher nicht wiederholt werden.

Für das System zur Qualitätssicherung treffen gleiche oder ähnliche Vorteile zu, wie sie bereits im Hinblick auf das erfindungsgemäße Verfahren zur Qualitätssicherung erwähnt wurden.

Die erfindungsgemäße Aufgabe wird ferner gelöst durch ein Computerprogrammprodukt mit einem Computerprogramm, das Softwaremittel zur Durchführung eines Verfahrens nach einem oder mehreren der genannten Ausführungsformen aufweist, wenn das Computerprogramm in einem System zur Qualitätssicherung von Service-dienstleistungen ausgeführt wird. Insbesondere handelt es sich bei dem Computerprogramm um die App für ein Smartphone, Tablet-PC oder dgl.

Bei dem maschinenlesbaren Kennzeichnungsmerkmal handelt es sich beispielsweise um einen Barcode, einen QR-Code oder ein RFID-Tag. Die Servicedienstleistungen sind insbesondere Reinigungsdienstleistungen. Als mobiles Benutzerendgerät ist insbesondere ein Smartphone, PDA, Tablet -Computer etc. vorgesehen. Die Zentraleinheit ist insbesondere ein Server oder eine andere geeignete Datenverarbeitungseinheit. Die Datenverbindung zwischen den Benutzerendgeräten und der Zentraleinheit ist insbesondere zumindest abschnittsweise drahtlos. Für eine drahtlose Datenübertragung werden die üblichen Protokolle und Technologien, wie beispielsweise LTE, 3G, UMTS, HSDPA, WLAN (IEEE 802.11 a, b, g, n, ac und folgende) verwendet. Auch eine drahtgebundene Datenübertragung bedient sich üblicher Technologien und Protokolle, wie beispielsweise TCP-IP. Die zuvor genannten Aspekte betreffen vorteilhaft alle genannten Ausführungsformen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch ein System zur Qualitätssicherung von an oder in einem Gebäude erbrachten oder zu erbringenden Servicedienstleistungen,
- Fig. 2 bis 4: jeweils ein schematisches Ablauf- und Kommunikationsdiagramm eines Verfahrens zur Qualitätssicherung von an oder in einem Gebäude erbrachten oder zu erbringenden Servicedienstleistungen,
- Fig. 5 und 7: schematisch ein weiteres System zur Qualitätssicherung von an oder in einem Gebäude erbrachten oder zu erbringenden Servicedienstleistungen und
- Fig. 6 und 8: schematisch eine Auswertung eines für eine Serviceassistenzeinheit spezifischen Datensatzes.

In den Zeichnungen sind jeweils gleiche oder gleichartige Elemente und/oder Teile mit denselben Bezugsziffern versehen, so dass von einer erneuten Vorstellung jeweils abgesehen wird.

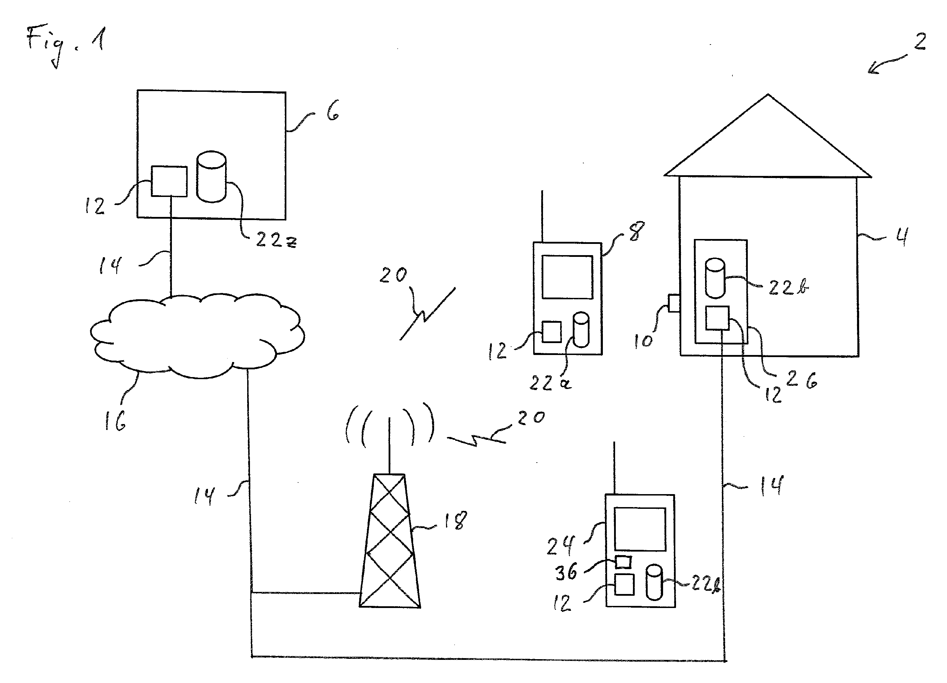

Fig. 1 zeigt schematisch ein System 2 zur Qualitätssicherung von Servicedienstleistungen. Beispielhaft wird dieses System 2 anhand von an oder in einem Gebäude 4 oder einem Gebäudeabschnitt erbrachten oder zu erbringenden Servicedienstleistungen erläutert. Die Funktionsweise des Systems 2 ist analog auf andere Szenarien übertragbar, in denen beispielsweise Servicedienstleistungen betreffend die Garten- und/oder Landschaftspflege, Hausmeisterdienstleistungen oder ähnliche, erbracht werden.

Das in Fig. 1 schematisch gezeigte System 2 umfasst eine Zentraleinheit 6, insbesondere einen Server, ein erstes mobiles Benutzerendgerät 8 und ein in oder an dem Gebäude 4 vorgesehenes maschinenlesbares Kennzeichnungsmerkmal 10, beispielsweise einen Barcode, QR-Code oder RFID-Tag. In dem dargestellten Ausführungsbeispiel befindet sich das Kennzeichnungsmerkmal 10 an dem Gebäude 4, beispielsweise an einer Eingangstür. Bei größeren Objekten ist das Kennzeichnungsmerkmal 10 beispielsweise an einer Eingangstür, Bürotür, einem Sanitärbereich etc. vorhanden. Das maschinenlesbare Kennzeichnungsmerkmal 10 umfasst gebäudespezifische Daten zur Identifizierung des Gebäudes 4, beispielsweise eine Kennziffer oder eine Adresse.

In der Zentraleinheit 6 und in dem ersten mobilen Benutzerendgerät 8 ist jeweils eine Kommunikationseinheit 12 vorgesehen, wobei die Kommunikationseinheiten 12 dazu eingerichtet sind, zumindest zeitweise eine Datenverbindung zwischen der Zentraleinheit 6 und dem ersten Benutzerendgerät 8 bereitzustellen. Die Datenverbindung ist zumindest abschnittsweise eine drahtlose Datenverbindung. In dem dargestellten Ausführungsbeispiel ist die Zentraleinheit 6 über eine drahtgebundene Datenverbindung 14, welche insbesondere zumindest abschnittsweise über das Internet 16 verläuft, mit einem Sender 18 verbunden. Die drahtgebundene Datenverbindung 14 ist unter Verwendung der üblichen Technologien und Standards realisiert. Ausgehend von dem Sender 18 erfolgt die Datenübertragung zu dem ersten mobilen Benutzerendgerät 8 über eine drahtlose Datenverbindung 20.

Ferner ist in der Zentraleinheit 6 und in dem ersten mobilen Benutzerendgerät 8 jeweils ein Speichermedium 22 vorgesehen. Weitere funktionelle Einheiten der Zentraleinheit 6 und des ersten mobilen Benutzerendgeräts 8, wie beispielsweise eine zentrale Verarbeitungseinheit (CPU), I/O-Controller etc. sind lediglich aus Gründen der Übersichtlichkeit nicht dargestellt und sind entsprechend der allgemein bekannten und üblichen Technik ausgeführt.

Das System 2 umfasst ferner ein zweites Benutzerendgerät, bei welchem es sich beispielsweise um ein zweites mobiles Benutzerendgerät 24 und/oder um eine in dem Gebäude 4 vorgesehene stationäre Servicestation 26 handelt.

Das zweite mobile Benutzerendgerät 24 und die stationäre Servicestation 26 sind ebenfalls mit einer Kommunikationseinheit 12 und mit einem zweiten Speichermedium 22b versehen. Die Kommunikationseinheiten 12 sowohl des zweiten mobilen Benutzerendgeräts 24 als auch der stationären Servicestation 26 sind dazu eingerichtet, eine drahtlose Datenverbindung 20 und/oder eine drahtgebundene Datenverbindung 14, insbesondere mit der Zentraleinheit 6, herzustellen. Lediglich beispielhaft ist die Kommunikationseinheit 12 der stationären Servicestation 26 dazu eingerichtet, eine Datenverbindung mit der Zentraleinheit 6 über eine drahtgebundene Datenverbindung 14 herzustellen. Die Datenübertragung zu dem zweiten mobilen Benutzerendgerät 24 erfolgt beispielhaft über die drahtlose Datenverbindung 20.

Eine Kommunikation zwischen dem ersten mobilen Benutzerendgerät 8 und dem zweiten mobilen Benutzerendgerät 24 erfolgt entweder direkt, d.h. über die drahtlosen Datenverbindungen 20 und den Sender 18, oder indirekt über die Zentraleinheit 6.

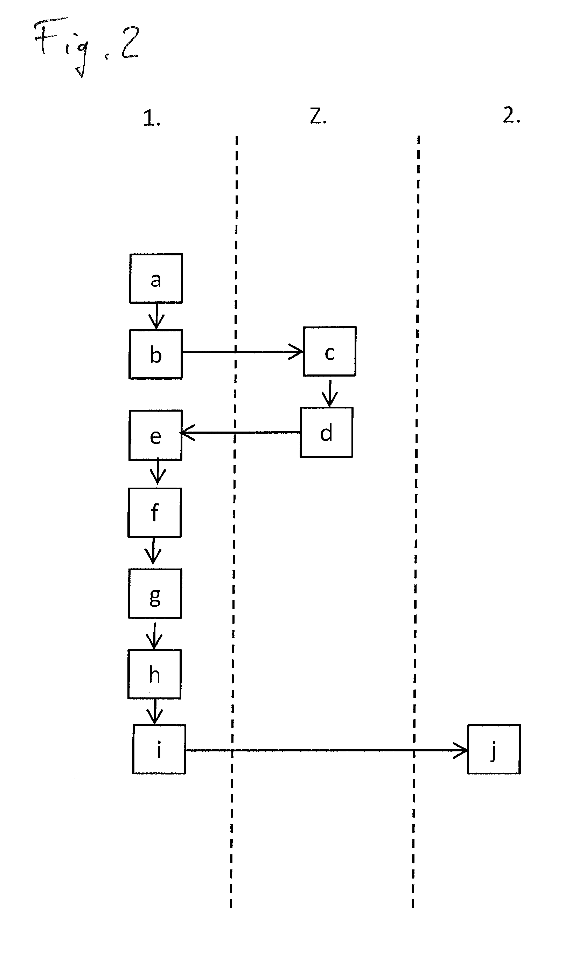

Die Funktionsweise des Systems 2 zur Qualitätssicherung von an dem Gebäude 4 erbrachten oder zu erbringenden Servicedienstleis-tungen wird anschließend unter Bezugnahme auf die in den Fig. 2 bis 4 gezeigten Ablauf- und Kommunikationsdiagramme, insbesondere unter Bezugnahme auf ein Verfahren zur Qualitätssicherung von an dem Gebäude 4 erbrachten oder zu erbringenden Servicedienstleistungen, erläutert.

In den Fig. 2 bis 4 illustriert die mit "1" gekennzeichnete Spalte Verarbeitungsschritte, welche in dem ersten mobilen Benutzerendgerät 8 durchgeführt werden. Die Spalte "Z" zeigt Verarbeitungsschritte, welche in der Zentraleinheit 6 durchgeführt werden. Schließlich zeigt die mit "2" gekennzeichnete Spalte jene Verarbeitungsschritte, die in dem zweiten Benutzerendgerät, also beispielsweise in dem zweiten mobilen Benutzerendgerät 24 oder in der stationären Servicestation 26, durchgeführt werden.

Gemäß einem Ausführungsbeispiel wird angenommen, dass auf dem ersten Speichermedium 22 des ersten mobilen Benutzerendgeräts 8 gebäudespezifische Daten vorhanden sind. Diese gebäudespezifischen Daten können beispielsweise benutzerseitig an dem ersten mobilen Benutzerendgerät 8 eingegeben werden. Entsprechend diesem Ausführungsbeispiel beginnt das in Fig. 2 gezeigte Ablauf- und Kommunikationsdiagramm mit Schritt f. In diesem Schritt werden außerdem die in dem ersten Speichermedium 22a vorhandenen gebäudespezifischen Daten einem für das Gebäude 4 oder den Gebäudeabschnitt vorgesehenen Leistungsverzeichnis zugeordnet. Dieses Leistungsverzeichnis spezifiziert die jeweils an oder in dem Gebäude 4 bzw. einem Gebäudeabschnitt zu erbringenden Servicedienstleistungen.

Gemäß einem weiteren Ausführungsbeispiel sind die gebäudespezifischen Daten nicht bereits auf dem ersten mobilen Benutzerendgerät 8 vorhandenen, sondern werden von der Zentraleinheit 6 abgerufen. Insbesondere ist in diesem Zusammenhang vorgesehen, dass mit dem ersten mobilen Benutzerendgerät das Kennzeichnungsmerkmal 10 an dem Gebäude 4 erfasst wird (Schritt a). Beispielsweise wird das Kennzeichnungsmerkmal 10 mit Hilfe eines in oder an dem ersten mobilen Benutzerendgerät 8 vorhandenen Scanners gescannt, fotografisch erfasst oder mit Hilfe eines RFID-Transponders ausgelesen.

Die ausgelesenen gebäudespezifischen Daten, beispielsweise eine Adresse oder eine Kennziffer, werden von dem ersten mobilen Benutzerendgerät 8 an die Zentraleinheit 6 übertragen (Schritt b). In der Zentraleinheit 6 werden die empfangenen gebäudespezifischen Daten einem für das Gebäude 4 vorgesehenen Leistungsverzeichnis zugeordnet, welches in dem zentralen Speichermedium 22z der Zentraleinheit 6 vorhanden ist. Das Leistungsverzeichnis umfasst Servicedienstleistungseinträge, die jeweils eine an dem Gebäude 4 zu erbringende Servicedienstleistung spezifizieren. Typische Servicedienstleistungseinträge sind beispielsweise: "Abfalleimer, erste Etage, leeren", "Fußböden in Büro 1 bis 4 saugen", "Fenster, vierte Etage, reinigen" etc.

Das Leistungsverzeichnis wird anschließend von der Zentraleinheit 6 an das erste mobile Benutzerendgerät 8 übertragen (Schritt d). Das erste mobile Benutzerendgerät 8 speichert das Leistungsverzeichnis auf seinem ersten Speichermedium 22a ab (Schritt e).

Eine mit der Qualitätssicherung der Servicedienstleistungen betraute Serviceperson, welche das erste mobile Benutzerendgerät 8 bei sich führt, führt anschließend in dem Gebäude 4 eine Qualitätskontrolle der erbrachten Servicedienstleistungen durch. Im Rahmen dieser Begehung empfängt das erste mobile Benutzerendgerät 8 Benutzereingaben. Die Benutzereingaben kennzeichnen einen Grad, zu dem die in dem Leistungsverzeichnis vorhandenen Servicedienstleistungseinträge erfolgreich erledigt wurden. Insbesondere werden die Einträge des Leistungsverzeichnisses als erledigt oder nicht erledigt gekennzeichnet. Ebenso ist es möglich, weitere graduelle Stufen, wie beispielsweise "teilweise erledigt" oder "zu einem gewissen Prozentsatz "X" erledigt", vorzusehen (Schritt f). Anschließend wird das bearbeitete Leistungsverzeichnis, umfassend die Servicedienstleistungseinträge und die den einzelnen Service-dienstleistungen zugeordneten Benutzereingaben, auf dem ersten Speichermedium 22a des ersten mobilen Benutzerendgerät 8 abgespeichert (Schritt g).

Das erste mobile Benutzerendgerät 8 erzeugt anschließend ein Bearbeitungsprotokoll, in welches, insbesondere ausgehend von dem bearbeiteten und abgespeicherten Leistungsverzeichnis, die als zu einem vorbestimmten Grad als "nicht erledigt" gekennzeichneten Servicedienstleistungseinträge übernommen werden (Schritt h).

Gemäß einem vorteilhaften Ausführungsbeispiel ist außerdem vorgesehen, dass das Bearbeitungsprotokoll allgemeine Hinweise umfasst. Unter dem Begriff "Bearbeitungsprotokoll" wird also sowohl ein allgemeiner Hinweis als auch eine konkrete Arbeitsanweisung an den Benutzer des zweiten Benutzerendgerätes verstanden. Ein allgemeiner Hinweis ist beispielsweise: "Die Servicekraft XYZ möge bitte eine frisch gereinigte Jacke anziehen." oder "Die Servicekraft ABC möge bitte in Zukunft pünktlicher zur Arbeit erscheinen". Eine konkrete Arbeitsanweisung ergibt sich wie oben beschrieben aus der Differenz zwischen den Einträgen im Leistungsverzeichnis und den beispielsweise im Rahmen einer Inspektion oder Begehung als auch tatsächlich erledigt angesehenen Leistungen. Der Benutzer des zweiten Benutzerendgerätes wird also konkret darauf hingewiesen, welche Leistungen noch zu erbringen oder nachzubessern sind.

Das erzeugte Bearbeitungsprotokoll wird anschließend von dem ersten mobilen Benutzerendgerät 8 an das zweite Benutzerendgerät übertragen (Schritt i). Mit anderen Worten erfolgt also eine Übertragung wahlweise oder auch gleichzeitig an das zweite mobile Benutzerendgerät 24 und die stationäre Servicestation 26. Das zweite Benutzerendgerät 24 speichert das Bearbeitungsprotokoll auf einem zweiten Speichermedium 22b ab (Schritt j).

Das Bearbeitungsprotokoll steht den beauftragten Servicekräften nun direkt zur Verfügung. Es wird beispielsweise auf einem Display des zweiten Benutzerendgeräts 24, 26 angezeigt. Bei dem zweiten Benutzerendgerät 24, 26 handelt es sich beispielsweise um ein mobiles Benutzerendgerät 24 oder auch um eine ortsfeste Servicestation 26. Ferner besteht die Möglichkeit, dass Servicemitarbeiter an einem beispielsweise zur Wiedergabe des Bearbeitungsprotokolls in die Servicestation 26 integrierten Tablet-Computer allgemeine Kommentare oder Kommentare zu dem Bearbeitungsprotokoll eingeben. Es besteht die Möglichkeit, auf Tätigkeiten, beispielsweise Reinigungsarbeiten, die nicht täglich stattfinden, sondern beispielsweise nur einmal pro Woche, 14-tägig oder einmal im Monat, hinzuweisen. Ein solcher Hinweis erfolgt unabhängig oder gemeinsam mit der Wiedergabe des Bearbeitungsprotokolls.

Ferner ist gemäß einem weiteren Ausführungsbeispiel vorgesehen, dass Ergänzungen des Bearbeitungsprotokolls von der Zentraleinheit 6 an das zweite Benutzerendgerät 24, 26 übertragen werden. So ist es möglich, dass beispielsweise dem Büro oder der Zentrale telefonisch mitgeteilte Mängel in das Bearbeitungsprotokoll mit aufgenommen werden. Ebenso sind allgemeine Informationen von der Zentraleinheit 6 an das zweite Benutzerendgerät 24, 26 übertragbar. In jedem Fall ist vorgesehen, dass die von dem zweiten Benutzerendgerät 24, 26 wiedergegebenen Informationen im Rahmen eines Login- und/oder Logout-Vorgangs benutzerseitig bestätigt werden.

Ebenso ist es möglich, die Bearbeitungsprotokolle auszuwerten. Umfassen diese beispielsweise wiederholte Mängelmeldungen, so ist es möglich, die Wiedergabe des Bearbeitungsprotokolls mit der Wiedergabe eines Schulungsvideos zu verbinden, welches speziell die wiederholt aufgefundenen Mängel betrifft.

Der Login-Vorgang umfasst insbesondere die folgenden Schritte: Die Servicekraft gibt zunächst eine persönliche Kennung, beispielsweise einen Benutzernamen oder eine Personalnummer an dem zweiten Benutzerendgerät 24, 26 ein. Zur Authentifizierung der Servicekraft wird anschließend deren Identität durch Abfrage beispielsweise einer PIN oder durch Erfassung biometrischer Daten verifiziert. Dieser Vorgang ist ebenfalls berührungslos möglich, indem beispielsweise eine mit einem RFID-Tag versehene Personalkarte der Servicekraft mit einem in dem zweiten Benutzerendgerät 24, 26 vorhandenen RFID-Transponder ausgelesen wird.

Anschließend wird auf einer Anzeige des zweiten Benutzerendgeräts 24, 26 das Bearbeitungsprotokoll wiedergegeben. Es ist ebenso möglich, dass das Bearbeitungsprotokoll als Audionachricht (bevorzugt auch multilingual) ausgegeben wird. Erst nachdem das Bearbeitungsprotokoll seitens der Servicekraft bestätigt wurde, wird der Login-Vorgang fortgesetzt. Zur Bestätigung des Bearbeitungsprotokolls betätigt die Servicekraft beispielsweise ein entsprechendes Sensorfeld (Softbutton) oder bestätigt durch eine gesprochene und von dem zweiten Benutzerendgerät 24, 26 empfangene Nachricht. Dabei ist vorgesehen, dass die Servicekraft das Bearbeitungsprotokoll als Ganzes oder jeden einzelnen Leistungseintrag Punkt für Punkt bestätigt. Erst nach erfolgter Bestätigung des Bearbeitungsprotokolls wird der Login-Vorgang erfolgreich beendet, indem insbesondere die Arbeitszeiterfassung gestartet wird. Anschließend wird beispielsweise noch eine entsprechende Nachricht visuell oder als Audionachricht an dem zweiten Benutzerendgerät 24, 26 ausgegeben. Nach erfolgreicher Beendigung des Login-Vorgangs stehen die Funktionen des Systems dem Benutzer zur Verfügung.

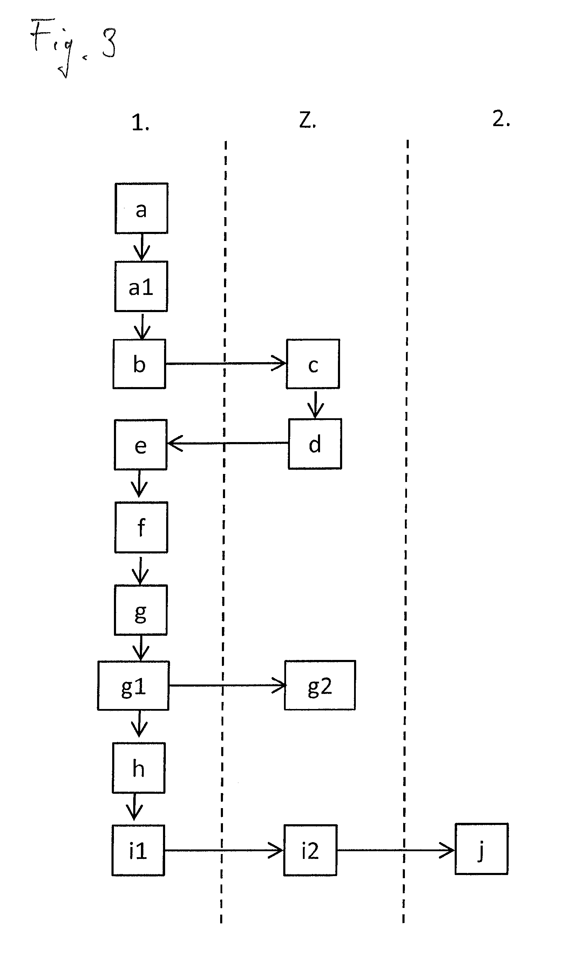

Das in Fig. 3 gezeigte Ablauf- und Kommunikationsdiagramm ist in den Schritten a, b bis g, h und j identisch zu dem in Fig. 2 gezeigten Ablauf- und Kommunikationsdiagramm. Auf die dortige Beschreibung der Verfahrensschritte wird verwiesen.

Das in Fig. 3 erläuterte Verfahren umfasst zusätzlich den Schritt a1. Nach der Erfassung des Kennzeichnungsmerkmals 10 wird ein erster Zeitpunkt der Erfassung des Kennzeichnungsmerkmals 10 ebenfalls festgehalten bzw. erfasst und in dem ersten Speichermedium 22a des ersten mobilen Benutzerendgeräts 8 abgespeichert.

Eine mit der Qualitätskontrolle betraute Serviceperson erfasst das Kennzeichnungsmerkmal 10 also zu Beginn und nach Abschluss der Bearbeitung des Leistungsverzeichnisses, also beispielsweise am Anfang und am Ende eines Kontrollgangs. Ein erster Zeitpunkt, zu dem das Kennzeichnungsmerkmal 10 zum ersten Mal erfasst wurde, und ein zweiter Zeitpunkt, zu dem das Kennzeichnungsmerkmal 10 erneut erfasst wird, werden außerdem an die Zentraleinheit 6 übertragen (Schritt g1). Dies erfolgt nach Beendigung der Erfassung der Benutzereingaben in Schritt g. Die Zentraleinheit speichert diese Informationen und wertet sie aus (Schritt g2).

Erste Daten, welche den ersten Zeitpunkt betreffen, umfassen insbesondere eine erste Uhrzeit und ein erstes Datum. Die zweiten Daten, welche den zweiten Zeitpunkt kennzeichnen, umfassen insbesondere eine zweite Uhrzeit und ein zweites Datum. Aus diesen Daten ergibt sich die für die Qualitätskontrolle benötigte Zeit. Insbesondere in Verbindung mit den Gebäudekenndaten kann anhand dieser Information beurteilt werden, ob die Qualitätskontrolle mit hinreichender oder aber auch mit zu großer Sorgfalt durchgeführt wurde.

Es ist ferner insbesondere vorgesehen, dass die mit der Qualitätskontrolle beauftragte Serviceperson, beispielsweise ein Objektleiter, nicht nur das Ergebnis der durchgeführten Reinigungsdienstleistungen, sondern auch die noch vorhandenen Reinigungsmaterialien erfasst. Insbesondere erfolgt eine automatische Abfrage der Reinigungsmaterialien, beispielsweise mithilfe eines Barcodescanners, der in das erste mobile Benutzerendgerät integriert ist. Eine insbesondere automatische Erfassung der vorhandenen Reinigungs- und Verbrauchsmaterialien erlaubt es, automatisch Nachbestellungen der Verbrauchs- und Reinigungsmaterialien vorzunehmen. Hierzu werden die entsprechenden Daten an die Zentraleinheit übertragen. Im Laufe der Zeit ist es so außerdem möglich, einen mittleren Verbrauch bzw. mittlere Verbrauchswerte des entsprechenden Objekts zu ermitteln.

Ferner ist bei dem in Fig. 3 gezeigten Verfahren vorgesehen, dass das Bearbeitungsprotokoll nicht direkt von dem ersten mobilen Benutzerendgerät 8 an das zweite Benutzerendgerät übertragen wird. Stattdessen erfolgt zunächst eine Übertragung des Bearbeitungsprotokolls von dem ersten mobilen Benutzerendgerät 8 an die Zentraleinheit 6 (Schritt i1). Die Zentraleinheit 6 speichert das Bearbeitungsprotokoll zum Zweck der Qualitätssicherung und Analyse auf dem zentralen Speichermedium 22z. Sie leitet das Bearbeitungsprotokoll außerdem an das zweite Benutzerendgerät weiter (Schritt J2). Die beiden Schritte i1 und i2 ersetzen den Schritt i in Fig. 2.

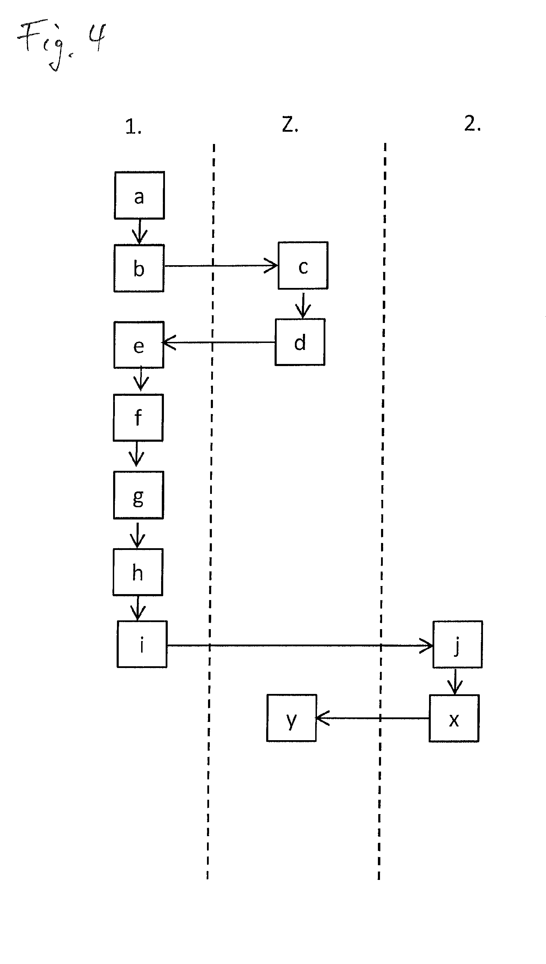

Das in Fig. 4 gezeigte Ablauf- und Kommunikationsdiagramm ist in den Schritten a bis j identisch zu dem in Fig. 2 gezeigten Ablaufund Kommunikationsdiagramm. Auf die Beschreibung der entsprechenden Schritte im Zusammenhang mit Fig. 2 wird verwiesen.

Nach dem Abspeichern des Bearbeitungsprotokolls auf dem zweiten Speichermedium 22b des zweiten Benutzerendgeräts 24 (Schritt j) empfängt das zweite Benutzerendgerät 24 Benutzerkenndaten im Rahmen eines personalisierten Login-Vorgangs. Dieser personalisierte Login-Vorgang erfolgt insbesondere zum Zweck einer Arbeitszeiterfassung (Schritt x). Das zweite Benutzerendgerät 24 bestätigt den Login-Vorgang nur dann als erfolgreich und schließt diesen ab, wenn eine weitere benutzerseitige Eingabe erfolgt, welche das Bearbeitungsprotokoll bestätigt. Ist dies erfolgt, wird eine entsprechende Nachricht an die Zentraleinheit 6 übermittelt und dort abgespeichert (Schritt y).

Ein ähnlicher Vorgang kann ebenfalls im Rahmen eines personalisierten Logout-Vorgangs wiederholt werden. Dieser insbesondere zum Zweck der Arbeitszeiterfassung durchgeführte Logout-Vorgang ist so gestaltet, dass das zweite Benutzerendgerät 24 eine Eingabe von Benutzerkenndaten nur dann als erfolgreich und abgeschlossen bestätigt, wenn eine benutzerseitige Eingabe, betreffend die Erledigung der in dem Bearbeitungsprotokoll vorhandenen Servicedienstleistungseinträge, empfangen wird.

Auch im Rahmen eines Login- bzw. Logout-Vorgangs ist es möglich, auf bedarfsweise oder nicht turnusmäßig stattfindende Reinigungsarbeiten hinzuweisen. Auch auf die Durchführung dieser Arbeiten wird vor erfolgreicher Beendigung des Login- bzw. Logout-Vorgangs hingewiesen. Auch wiederholte Mängelmeldungen können zum Anlass genommen werden, ein erfolgreiches Login oder Logout erst nach Wiedergabe eines entsprechenden Schulungsvideos zu ermöglichen. Außerhalb der Regelarbeitszeiten kann ferner auf Nachtund Feiertagszuschläge hingewiesen werden. Gleiches gilt für aktuelle Hinweise oder Meldungen betreffend das Objekt sowie für Hinweise bezüglich des Arbeitsschutzes.

Es ist ferner vorgesehen, dass das zweite mobile Benutzerendgerät 24 im Rahmen des personalisierten Login- und/oder Logout-Vorgangs seine Ortsdaten erfasst. Zu diesem Zweck umfasst das zweite mobile Benutzerendgerät 24 einen GPS-Empfänger 36 (vgl. Fig. 1). Die von dem zweiten Benutzerendgerät 24 erfassten Ortsdaten werden in dem zweiten Speichermedium 22b abgespeichert. Es ist ferner insbesondere vorgesehen, dass die erfassten Ortsdaten an das erste Benutzerendgerät und/oder an die Zentraleinheit 6 übertragen werden.

Es ist mit anderen Worten möglich festzustellen, an welchem Ort sich die Servicekraft befindet, wenn sie den Login- bzw. Logout-Vorgang durchführt. Es ist eine Plausibilitätsüberprüfung möglich, ob diese, in dem Moment, in dem sie sich in das System einloggt, sich tatsächlich auch an ihrem Arbeitsplatz befindet.

Es ist ferner insbesondere vorgesehen, dass gemeinsam mit dem Bearbeitungsprotokoll Ortsdaten des Gebäudes 4 oder des Gebäudeabschnitts an das zweite Benutzerendgerät 24 übertragen werden. Auch diese Ortsdaten werden in dem zweiten Speichermedium 22b abgespeichert. Die von dem zweiten mobilen Benutzerendgerät 24 erfassten Ortsdaten werden mit den Ortsdaten des Gebäudes 4 oder des Gebäudeabschnitts verglichen. Es wird eine Abweichung zwischen diesen Ortsdaten bestimmt. Der Login- und/oder Logout-Vorgang wird nur dann als erfolgreich bestätigt und abgeschlossen, wenn die Abweichung geringer als ein vorgegebener Grenzwert ist. Beispielsweise ist als Grenzwert eine Entfernung von wenigen 100 Metern vorgesehen. Wird dieser Grenzwert überschritten, wird der erfolgreiche Login verweigert. Insbesondere wird die Arbeitszeiterfassung nicht gestartet.

So ist vorteilhaft sichergestellt, dass sich die Servicekraft, in dem Moment, in dem sie den Login-Vorgang durchführt, tatsächlich auch an oder in dem zu reinigenden Gebäude und somit an ihrem Arbeitsplatz befindet.

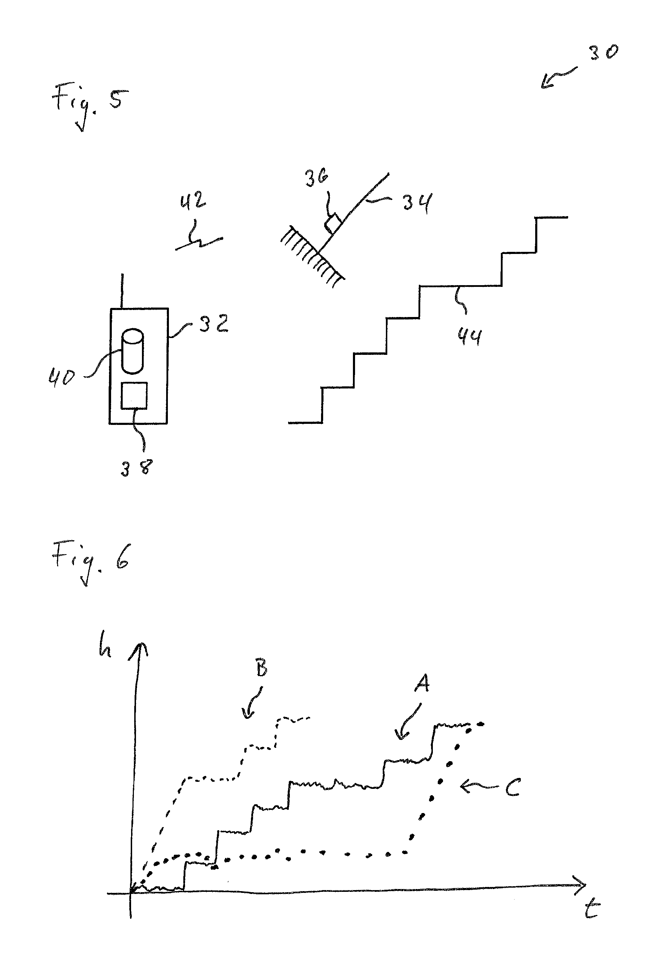

Fig. 5 zeigt schematisch ein weiteres System 30 zur Qualitätssicherung von an oder in einem Gebäude erbrachten oder zu erbringenden Servicedienstleistungen. Dieses System 30 ist mit dem in Fig. 1 gezeigten System 2 kombinierbar. Das weitere System 30 umfasst eine Basisstation 32 und eine mobile Serviceassistenzeinheit, bei welcher es sich insbesondere um ein Reinigungsgerät 34, insbesondere ein handgeführtes Reinigungsgerät 34, handelt. Das handgeführte Reinigungsgerät 34 ist beispielsweise ein Besen, Schrubber, Staubsauger etc. Beispiele für nicht handgeführte Reinigungsgeräte 34 sind beispielsweise auf Aufsitzreinigungsmaschinen. Wird das weitere System 30 in das in Fig. 1 gezeigte System 2 integriert, so ist die Basisstation 32 insbesondere identisch mit der stationären Servicestation 26.

Das Reinigungsgerät 34 umfasst eine Positionserfassungseinheit, insbesondere einen GPS-Empfänger 36. Der GPS-Empfänger 36 ist in oder an dem Reinigungsgerät 34 vorhanden und insbesondere in dieses integriert. Beispielsweise ist der GPS-Empfänger 36 in einen Stiel eines handgeführten Reinigungsgerätes 34 integriert. Die Positionserfassungseinheit ist mit einer Kommunikationseinheit (nicht dargestellt) versehen, ebenso umfasst die Basisstation 32 eine Kommunikationseinheit 38. Ferner umfasst die Basisstation 32 ein Speichermedium 40. Die Kommunikationseinheit 38 der Basisstation 32 und die Kommunikationseinheit des Reinigungsgeräts 34 sind dazu eingerichtet, zumindest zeitweise eine insbesondere drahtlose Datenverbindung zwischen dem Reinigungsgerät 34 und der Basisstation 32 bereitzustellen.

Die Positionserfassungseinheit des Reinigungsgeräts 34 ist dazu eingerichtet, zeitabhängig Ortsdaten des Reinigungsgeräts 34 zu erfassen und die erfassten Ortsdaten einschließlich der dazugehörigen Zeitdaten zu speichern. Zu diesem Zweck ist in dem Reinigungsgerät 34 ein Speichermedium vorgesehen. Mit anderen Worten arbeitet das Reinigungsgerät 34 als Datenlogger. Sobald eine Datenverbindung mit der Basisstation 32 hergestellt ist, werden die in dem internen Speicher vorhandenen Daten an diese gesendet. Gemäß einem weiteren Ausführungsbeispiel ist es ebenso möglich, dass das Reinigungsgerät 34 die erfassten Daten permanent an die Basisstation 32 überträgt. Insbesondere erfasst der GPS-Empfänger 36 einen Ort und eine geodätische Höhe h des handgeführten Reinigungsgerätes 34 und überträgt diese nach entsprechender Aufzeichnung drahtlos an die Basisstation 32. Hierzu ist eine drahtlose Datenverbindung 42 vorhanden. Zur exakten Erfassung von Höhendaten ist die Positionserfassungseinheit, insbesondere der GPS-Empfänger 36, mit einem Luftdruckmesser ausgestattet. Exakte Höhendaten lassen sich aus der Kombination einer Luftdruckmessung und einer GPS-Messung gewinnen. Gleiches gilt für eine Serviceassistenzeinheit, bei der es sich nicht um ein Reinigungsgerät handelt. Um eine zuverlässige Kommunikation des GPS-Datenloggers mit der Basisstation 32 zu ermöglichen, werden die an einer Basisstation 32 verwendeten Datenlogger zuvor auf die eingesetzte Basisstation 32 programmiert.

Die Basisstation 32 ist ferner dazu eingerichtet, einen auf diese Weise erzeugten, für das Reinigungsgerät 34 spezifischen Datensatz umfassend zeitabhängige Ortsdaten zu erzeugen und diesen einer Auswertung zugänglich zu machen.

Fig. 6 zeigt beispielhaft eine Auswertung eines Datensatzes umfassend zeitabhängige Höhendaten. Auf der Ordinate ist die geodätische Höhe h und auf der Abszisse die Zeit t abgetragen. Handelt es sich bei dem handgeführten Reinigungsgerät 34 beispielsweise um einen Besen, mit dem die Treppe 44 gereinigt wird, so kann bei einem Datensatz entsprechend der Kurve A davon ausgegangen werden, dass die Treppe ordnungsgemäß gereinigt wurde. Die Höheninformation hat in Abhängigkeit von der Zeit t einen in etwa stufenförmigen Verlauf, der der tatsächlichen Topologie der zu reinigenden Treppe 44 sehr nahe kommt. Wird hingegen eine Kurve B festgestellt, so ist davon auszugehen, dass der untere Teil der Treppe 44 aufgrund des anfänglich steilen Verlaufs der Kurve B nicht ausreichend gereinigt wurde. Eine Kurve C deutet darauf hin, dass das Reinigungsgerät 34 für einen längeren Zeitraum auf einer der unteren Treppenstufen gelegen hat und anschließend bis zum Ende der Treppe 44 in rascher Bewegung verbracht wurde. Es ist nicht davon auszugehen, dass die Treppe 44 gereinigt wurde.

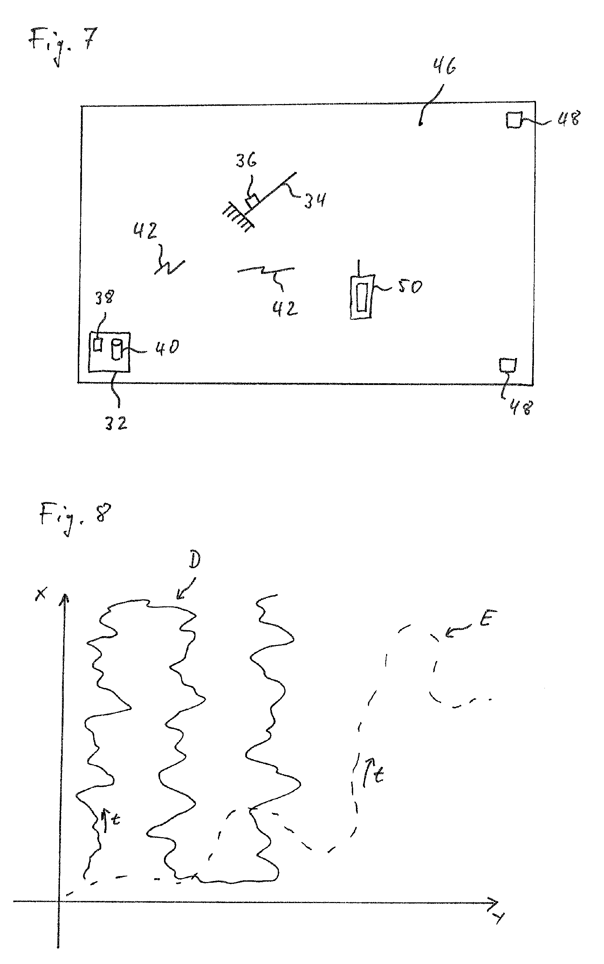

Fig. 7 zeigt eine schematische Draufsicht auf eine zu reinigende Fläche 46. Am Rande dieser Fläche 46 befindet sich beispielhaft die Basisstation 32. Die Möglichkeit, Ortskoordinaten von dem GPS-Empfänger 36 des Reinigungsgeräts 34 zu empfangen, wird durch zusätzliche GPS-Transponder 48, die mit der Basisstation 32 gekoppelt sind, erweitert. Ferner ist ein drittes Benutzerendgerät 50 gezeigt, bei welchem es sich beispielsweise um ein PDA oder Smartphone handelt. Dieses wird beispielsweise in der Tasche eines Kleidungsstücks einer Serviceperson mitgeführt. Sowohl das handgeführte Reinigungsgerät 34 als auch das dritte Benutzerendgerät 50 werden als Serviceassistenzeinheit verstanden. Von der Serviceassistenzeinheit 34, 50 zeitabhängig erfasste Ortsdaten werden über die drahtlose Datenverbindung 42 an die Basisstation 32 übertragen.

Eine Auswertung der zeitabhängig erfassten Ortsdaten der Serviceassistenzeinheit zeigt beispielhaft Fig. 8. Die Ortskoordinaten X und Y sind auf den beiden Achsen des Koordinatensystems dargestellt. In dieser Ebene ist eine über der Zeit t aufgenommene Trajektorie dargestellt, die dem Ort der Serviceassistenzeinheit auf der zu reinigenden Fläche 46 entspricht.

Die Kurve D lässt den Rückschluss zu, dass das handgeführte Reinigungsgerät 34 verwendet wurde, um systematisch eine Fläche 46 zu reinigen. Im Gegensatz dazu deutet die Kurve E darauf hin, dass beispielsweise das Reinigungsgerät 34 mehr oder weniger willkürlich über die zu reinigende Fläche 46 geführt wurde, so dass nicht von einer entsprechenden Reinigungsleistung auszugehen ist.

Gemäß einem weiteren Ausführungsbeispiel ist vorgesehen, dass die Basisstation 32 Ortsdaten einer vorgegebenen Serviceroute auf dem Speichermedium 40 vorhält. Die Serviceroute kann ebenso auf dem zentralen Speichermedium 22z der Zentraleinheit 6 vorliegen. Eine Serviceroute umfasst beispielsweise die aufeinanderfolgend abzuarbeitenden Bereiche eines zu reinigenden Gebäudes. Zur Beurteilung der Qualität der Servicedienstleistung erfolgt in der Basisstation 32, insbesondere in einer Zentraleinheit 6 (vgl. Fig. 1) ein Vergleich des für die Serviceassistenzeinheit spezifischen Datensatzes mit der Serviceroute. Wird die Serviceroute eingehalten, ist einerseits von einer entsprechenden Qualität der Servicedienstleistung und außerdem von einer effektiven Abarbeitung der erforderlichen Schritte auszugehen.

Ferner ist insbesondere vorgesehen, dass die Basisstation 32 und die Serviceassistenzeinheit, insbesondere das dritte Benutzerendgerät 50, in einem Stand-by-Zustand über eine drahtgebundene Verbindung miteinander gekoppelt sind. Beispielsweise ist das dritte Benutzerendgerät 50 über eine USB-Verbindung mit der Basisstation 32 verbunden. Die Basisstation 32 umfasst beispielsweise einen Tablet-Computer, mit dem die Verbindung hergestellt wird.

Die Basisstation 32 und/oder die Serviceassistenzeinheit 34, 50 empfängt Benutzerkenndaten im Rahmen eines personalisierten Login-Vorgangs. Dieser Vorgang dient insbesondere einer Arbeitszeiterfassung. Der Login-Vorgang wird seitens der Basisstation 32 und/oder seitens der Serviceassistenzeinheit 34, 50 nur dann erfolgreich bestätigt und abgeschlossen, wenn die drahtgebundene Verbindung zwischen der Basisstation 32 und der Serviceassistenzeinheit 34, 50 nach Eingabe der Login-Daten getrennt wird. So ist sichergestellt, dass insbesondere das dritte Benutzerendgerät auch tatsächlich verwendet wird.

Nach Beendigung der Arbeiten wir in analoger Art und Weise ein Logout-Vorgang nur dann bestätigt, wenn die drahtgebundene Verbindung zwischen der Basisstation 32 und der Serviceassistenzeinheit 34, 50 nach Eingabe der Logout-Daten wieder hergestellt wird. So ist sichergestellt, dass die zeitabhängig erfassten Ortsdaten sicher auf die Basisstation 32 übertragen werden und außerdem die Serviceassistenzeinheit geladen wird.

Um die Motivation der Servicekräfte zu steigern, ist es möglich, ausgehend von den erfassten Daten eine interne "Reinigungsmeisterschaft" zu veranstalten. Es können beispielsweise Wochensieger, Monatssieger, Quartalssieger und Jahressieger ermittelt werden, wobei die Rangfolge anhand der Mängelliste erstellt wird. Je kürzer die Mängelliste ist, desto höher ist der Platz in der Rangfolge. Ein Blick auf das Display der Basisstation genügt, um Informationen darüber zu erhalten, welcher Mitarbeiter gerade in Führung liegt.

Ferner ist es möglich, die Serviceassistenzeinheit in 34, 50 als Einheiten mit einer Kamera, insbesondere als Brille, auszugestalten. Werden derartige Brillen während der Tätigkeit von den Reinigungskräften getragen, so ließe sich bei Bedarf ein Reklamationsfall ausgehend von einer derart erstellten Dokumentation, schnell und einfach klären.

Die zuvor genannten Aspekte betreffen vorteilhaft alle der genannten Ausführungsbeispiele.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: System
- 4: Gebäude
- 6: Zentraleinheit
- 8: erstes mobiles Benutzerendgerät
- 10: Kennzeichnungsmerkmal
- 12: Kommunikationseinheit
- 14: drahtgebundene Datenverbindung
- 16: Internet
- 18: Sender
- 20: drahtlose Datenverbindung
- 22a, 22b, 22z: Speichermedium
- 24: zweites mobiles Benutzerendgerät
- 26: stationäre Servicestation
- 30: weiteres System
- 32: Basisstation
- 34: handgeführtes Reinigungsgerät
- 36: GPS-Empfänger
- 38: Kommunikationseinheit
- 40: Speichermedium
- 42: drahtlose Datenverbindung
- 44: Treppe
- 46: zu reinigende Fläche
- 48: GPS-Transponder
- 50: drittes Benutzerendgerät

## Patentansprüche

1. Verfahren zur Qualitätssicherung von an oder in einem Gebäude (4) oder einem Gebäudeabschnitt erbrachten oder zu erbringenden Servicedienstleistungen, wobei ein erstes mobiles Benutzerendgerät (8), umfassend ein erstes Speichermedium (22a) und eine Kommunikationseinheit (12), vorgesehen ist, wobei das Verfahren die folgenden Schritte umfasst:
a) Zuordnen von auf dem ersten Speichermedium (22a) vorhandenen gebäudespezifischen Daten zu einem für das Gebäude (4) vorgesehenen Leistungsverzeichnis, welches Servicedienstleistungseinträge umfasst, die jeweils eine an dem Gebäude (4) oder dem Gebäudeabschnitt zu erbringende Servicedienstleistung spezifizieren,
b) Empfangen von Benutzereingaben an dem ersten Benutzerendgerät (8), wobei die Benutzereingaben die in dem Leistungsverzeichnis vorhandenen Servicedienstleistungseinträge hinsichtlich eines Grades einer erfolgreichen Erledigung der zugehörigen Servicedienstleistung kennzeichnen,
c) Abspeichern eines bearbeiteten Leistungsverzeichnisses, umfassend die Servicedienstleistungseinträge und die den einzelnen Servicedienstleistungseinträgen zugeordneten Benutzereingaben, auf dem ersten Speichermedium (22a) des ersten Benutzerendgeräts (8),
wobei ein zweites Benutzerendgerät (24, 26) mit einem zweiten Speichermedium (22b) und einer Kommunikationseinheit (12) vorgesehen ist, wobei die Kommunikationseinheit (12) des zweiten Benutzerendgeräts (24, 26) dazu eingerichtet ist, zumindest zeitweise eine Datenverbindung (14, 20) zu dem ersten Benutzerendgerät (8) bereitzustellen, wobei
d) ein Bearbeitungsprotokoll in dem ersten Benutzerendgerät (8) erzeugt wird und wobei
e) das Bearbeitungsprotokoll von dem ersten Benutzerendgerät (8) an das zweite Benutzerendgerät (24, 26) übertragen und
f) auf dem zweiten Speichermedium (22b) des zweiten Benutzerendgeräts (24, 26) abgespeichert wird,
**dadurch gekennzeichnet, dass**
das zweite Benutzerendgerät (24, 26) Benutzerkenndaten im Rahmen eines personalisierten Login-Vorgangs, insbesondere zum Zweck einer Arbeitszeiterfassung, empfängt, wobei der Login-Vorgang seitens des zweiten Benutzerendgeräts (24, 26) nur dann als erfolgreich bestätigt und abgeschlossen wird, wenn eine benutzerseitige Eingabe betreffend eine Bestätigung des Bearbeitungsprotokolls empfangen wird.

2. Verfahren nach Anspruch 1, **dadurch gekennzeichnet, dass** das Bearbeitungsprotokoll allgemeine Hinweise umfasst und/oder in das Bearbeitungsprotokoll ausgehend von dem bearbeiteten und abgespeicherten Leistungsverzeichnis die als zumindest zu einem vorgebbaren Grad als nicht erledigt gekennzeichneten Servicedienstleistungseinträge übernommen werden.

3. Verfahren nach Anspruch 1 oder 2, **dadurch gekennzeichnet, dass** ferner eine Zentraleinheit (6) mit einem zentralen Speichermedium (22z) und einer Kommunikationseinheit (12) vorgesehen ist, wobei die Kommunikationseinheit (12) der Zentraleinheit (6) und die Kommunikationseinheit (12) des ersten Benutzerendgeräts (8) dazu eingerichtet sind, zumindest zeitweise eine Datenverbindung (14, 20) zwischen der Zentraleinheit (6) und dem ersten Benutzerendgerät (8) bereitzustellen, wobei das Verfahren ferner die folgenden Schritte umfasst:
a) Übertragen von gebäudespezifischen Daten von dem ersten Benutzerendgerät (8) an die Zentraleinheit (6),
b) Zuordnen der gebäudespezifischen Daten zu einem für das Gebäude (4) vorgesehenen Leistungsverzeichnis in der Zentraleinheit (6), wobei das Leistungsverzeichnis auf dem zentralen Speichermedium (22z) der Zentraleinheit vorhanden ist,
c) Übertragen des Leistungsverzeichnisses von der Zentraleinheit (6) an das erste Benutzerendgerät (8),
d) Abspeichern des Leistungsverzeichnisses auf dem ersten Speichermedium (22a) des ersten Benutzerendgeräts (8),
insbesondere
e) Übertragen des Bearbeitungsprotokolls von dem ersten Benutzerendgerät (8) an die Zentraleinheit (6)
f) Speichern des Bearbeitungsprotokolls auf dem zentralen Speichermedium (22z) der Zentraleinheit (6),
g) Übertragen des Bearbeitungsprotokolls von der Zentraleinheit (6) an das zweite Benutzerendgerät (24, 26)

4. Verfahren nach einem der Ansprüche 1 bis 3, **dadurch gekennzeichnet, dass** an oder in dem Gebäude (4) oder dem Gebäudeabschnitt ein maschinenlesbares Kennzeichnungsmerkmal (10) vorgesehen ist, welches gebäudespezifische Daten zur Identifizierung des Gebäudes (4) oder Gebäudeabschnitts umfasst, wobei mit dem ersten Benutzerendgerät (8) das Kennzeichnungsmerkmal (10) erfasst und die gebäudespezifischen Daten ausgelesen werden, wobei ein erster Zeitpunkt dieser ersten Erfassung des Kennzeichnungsmerkmals (10) durch das erste Benutzerendgerät (8) erfasst und auf einem ersten Speichermedium (22a) des ersten Benutzerendgeräts (8) abgespeichert wird, wobei das Kennzeichnungsmerkmal (10) nach Empfang der Benutzereingaben an dem ersten Benutzerendgerät (8) mit dem ersten Benutzerendgerät (8) erneut erfasst und ausgelesen wird, wobei das erste Benutzerendgerät (8) einen zweiten Zeitpunkt der erneuten Erfassung des Kennzeichnungsmerkmals (10) in dem ersten Speichermedium (22a) abspeichert, und wobei das erste Benutzerendgerät (8) erste Daten betreffend den ersten Zeitpunkt, insbesondere eine erste Uhrzeit und ein erstes Datum des ersten Zeitpunkts, und zweite Daten betreffend den zweiten Zeitpunkt, insbesondere eine zweite Uhrzeit und ein zweites Datum des zweiten Zeitpunkts, an die Zentraleinheit (6) überträgt.

5. Verfahren nach Anspruch 1, **dadurch gekennzeichnet, dass** das zweite Benutzerendgerät (24, 26) Benutzerkenndaten im Rahmen eines personalisierten Logout-Vorgangs, insbesondere zum Zweck einer Arbeitszeiterfassung, empfängt, wobei der Logout-Vorgang seitens des zweiten Benutzerendgeräts (24, 26) nur dann als erfolgreich bestätigt und abgeschlossen wird, wenn eine benutzerseitige Eingabe, betreffend eine Erledigung der in dem Bearbeitungsprotokoll vorhandenen Servicedienstleistungseinträge empfangen wird.

6. Verfahren nach einem der Ansprüche 1 bis 5, **dadurch gekennzeichnet, dass** das zweite Benutzerendgerät (24) eine Positionserfassungseinheit, insbesondere einen GPS-Empfänger (36), umfasst, wobei im Rahmen des personalisierten Loginund/oder Logout-Vorgangs Ortsdaten des zweiten Benutzerendgeräts (24) erfasst und insbesondere in dem zweiten Speichermedium (22b) abgespeichert werden, wobei insbesondere ferner die erfassten Ortsdaten an das erste Benutzerendgerät (8) und/oder an eine Zentraleinheit (6) übertragen werden.

7. Verfahren nach Anspruch 6, **dadurch gekennzeichnet, dass** gemeinsam mit dem Bearbeitungsprotokoll Ortsdaten des Gebäudes (4) oder des Gebäudeabschnitts an das zweite Benutzerendgerät (24) übertragen und in dem zweiten Speichermedium (22b) abgespeichert werden, wobei die von dem zweiten Benutzerendgerät (24) erfassten Ortsdaten mit den Ortsdaten des Gebäudes (4) oder des Gebäudeabschnitts verglichen und eine Abweichung bestimmt werden und der Login- und/oder Logout-Vorgang nur dann als erfolgreich und bestätigt und abgeschlossen wird, wenn die Abweichung geringer als ein vorgegebener Grenzwert ist.

8. Verfahren nach einem der Ansprüche 1 bis 7, **dadurch gekennzeichnet, dass** eine Basisstation (32) und eine mobile Serviceassistenzeinheit vorgesehen sind, wobei die Serviceassistenzeinheit eine Positionserfassungseinheit, insbesondere einen GPS-Empfänger (36), eine Kommunikationseinheit (38) und ein Speichermedium umfasst, und wobei die Basisstation (32) eine Kommunikationseinheit (38) und ein Speichermedium (40) umfasst, wobei die Kommunikationseinheit (38) der Basisstation (32) und der Serviceassistenzeinheit jeweils dazu eingerichtet sind, zumindest zeitweise eine Datenverbindung (42) zwischen der Serviceassistenzeinheit und der Basisstation (32) bereitzustellen, wobei die Positionserfassungseinheit der Serviceassistenzeinheit zeitabhängig Ortsdaten der Serviceassistenzeinheit erfasst, die erfassten Ortsdaten einschließlich der zugehörigen Zeitdaten an die Basisstation (32) sendet, die Basisstation (32) und/oder die Serviceassistenzeinheit einen Stand-by-Zustand der Serviceassistenzeinheit erkennt, und die Basisstation (32) und/oder die Serviceassistenzeinheit Benutzerkenndaten im Rahmen eines personalisierten Login-Vorgangs, insbesondere zum Zweck einer Arbeitszeiterfassung, empfängt bzw. empfangen, wobei der Login-Vorgang seitens der Basisstation (32) und/oder seitens der Serviceassistenzeinheit nur dann als erfolgreich bestätigt und abgeschlossen wird, wenn ein Stand-by-Zustand der Serviceassistenzeinheit beendet und die Serviceassistenzeinheit zur Erfassung von Ortsdaten und zugehörigen Zeitdaten aktiviert wird.

9. Verfahren nach Anspruch 8, **dadurch gekennzeichnet, dass** die Basisstation (32) die Ortsdaten einschließlich der zugehörigen Zeitdaten in einem für die Serviceassistenzeinheit spezifischen Datensatz auf dem Speichermedium (40) speichert, auf dem Speichermedium (40) der Basisstation (32) außerdem Ortsdaten einer vorgegebenen Serviceroute vorhanden sind und die Basisstation (32) den für die Serviceassistenzeinheit spezifischen Datensatz einer Auswertung zugänglich macht, insbesondere an die Zentraleinheit (6) übertragt, wobei die Auswertung insbesondere einen Vergleich der für die Serviceassistenzeinheit spezifischen Ortsdaten mit den Ortsdaten der Serviceroute umfasst.

10. Verfahren nach Anspruch 8 oder 9, **dadurch gekennzeichnet, dass** die Basisstation (32) und/oder die Serviceassistenzeinheit Benutzerkenndaten im Rahmen eines personalisierten Logout-Vorgangs, insbesondere zum Zweck einer Arbeitszeiterfassung, empfängt bzw. empfangen, wobei der Logout-Vorgang seitens der Basisstation (32) und/oder der Serviceassistenzeinheit nur dann als erfolgreich bestätigt und abgeschlossen wird, wenn die Serviceassistenzeinheit und die Basisstation eine Datenverbindung aufbauen und die zeitabhängig erfassten Ortsdaten von der Serviceassistenzeinheit an die Basisstation (32) gesendet werden.

11. Verfahren nach einem der Ansprüche 1 bis 10 **dadurch gekennzeichnet, dass** eine Basisstation (32) und ein, insbesondere handgeführtes, Reinigungsgerät (34), vorgesehen sind, wobei das Reinigungsgerät (34) eine Positionserfassungseinheit, insbesondere einen GPS-Empfänger (36), eine Kommunikationseinheit (38) und ein Speichermedium umfasst, und wobei die Basisstation (32) eine Kommunikationseinheit (38) und ein Speichermedium (40) umfasst, wobei die Kommunikationseinheit (38) der Basisstation (32) und der Serviceassistenzeinheit jeweils dazu eingerichtet sind, zumindest zeitweise eine Datenverbindung (42) zwischen der Serviceassistenzeinheit und der Basisstation (32) bereitzustellen, wobei die Positionserfassungseinheit des Reinigungsgeräts (34) zeitabhängig Ortsdaten des Reinigungsgeräts (34) erfasst und abspeichert, wobei die erfassten Ortsdaten einschließlich der zugehörigen Zeitdaten an die Basisstation (32), insbesondere zeitverzögert, gesendet werden.

12. System (2) zur Qualitätssicherung von an oder in einem Gebäude (4) oder einem Gebäudeabschnitt erbrachten oder zu erbringenden Servicedienstleistungen, wobei in dem System (2) ein erstes mobiles Benutzerendgerät (8), umfassend ein erstes Speichermedium (22a) und eine Kommunikationseinheit (12), vorgesehen ist, wobei das erste mobile Benutzerendgerät dazu eingerichtet ist,
a) auf dem ersten Speichermedium (22a) vorhandene gebäudespezifische Daten einem für das Gebäude (4) vorgesehenen Leistungsverzeichnis, welches Servicedienstleistungseinträge umfasst, die jeweils eine an dem Gebäude (4) oder dem Gebäudeabschnitt zu erbringende Servicedienstleistung spezifizieren, zuzuordnen,
b) Benutzereingaben, die die in dem Leistungsverzeichnis vorhandenen Servicedienstleistungseinträge hinsichtlich eines Grades einer erfolgreichen Erledigung der zugehörigen Servicedienstleistung kennzeichnen, zu empfangen,
c) ein bearbeitetes Leistungsverzeichnis, umfassend die Servicedienstleistungseinträge und die den einzelnen Servicedienstleistungseinträgen zugeordneten Benutzereingaben, auf dem ersten Speichermedium (22a) des ersten Benutzerendgeräts (8) abzuspeichern,
wobei in dem System (2) ein zweites Benutzerendgerät (24, 26) mit einem zweiten Speichermedium (22b) und einer Kommunikationseinheit (12) vorgesehen ist, wobei die Kommunikationseinheit (12) des zweiten Benutzerendgeräts (24, 26) dazu eingerichtet ist, zumindest zeitweise eine Datenverbindung (14, 20) zu dem ersten Benutzerendgerät (8) bereitzustellen, wobei das erste Benutzerendgerät dazu eingerichtet ist,
d) ein Bearbeitungsprotokoll zu erzeugen, und
e) das Bearbeitungsprotokoll an das zweite Benutzerendgerät (24, 26) zu übertragen,
wobei das zweite Benutzerendgerät (24, 26) dazu eingerichtet ist,
f) das Bearbeitungsprotokoll auf dem zweiten Speichermedium (22b) abzuspeichern,
**dadurch gekennzeichnet, dass**
das zweite Benutzerendgerät (24, 26) dazu eingerichtet ist, Benutzerkenndaten im Rahmen eines personalisierten Login-Vorgangs, insbesondere zum Zweck einer Arbeitszeiterfassung, zu empfangen, und wobei das zweite Benutzerendgerät dazu eingerichtet ist, den Login-Vorgang dann erfolgreich zu bestätigen und abzuschließen, wenn eine benutzerseitige Eingabe, betreffend eine Bestätigung des Bearbeitungsprotokolls empfangen wird.

13. System (2) nach Anspruch 12, **dadurch gekennzeichnet, dass** das Bearbeitungsprotokoll allgemeine Hinweise umfasst und/oder in das Bearbeitungsprotokoll ausgehend von dem bearbeiteten und abgespeicherten Leistungsverzeichnis die zumindest zu einem vorgebbaren Grad als nicht erledigt gekennzeichneten Servicedienstleistungseinträge übernommen werden.

14. System (2) nach Anspruch 12 oder 13, **dadurch gekennzeichnet, dass** ferner eine Zentraleinheit (6) mit einem zentralen Speichermedium (22z) und einer Kommunikationseinheit (12) vorgesehen ist, wobei die Kommunikationseinheit (12) der Zentraleinheit (6) und die Kommunikationseinheit (12) des ersten Benutzerendgeräts (8) dazu eingerichtet sind, zumindest zeitweise eine Datenverbindung (14, 20) zwischen der Zentraleinheit (6) und dem ersten Benutzerendgerät (8) bereitzustellen, wobei das erste Benutzerendgerät (8) dazu eingerichtet ist,
a) gebäudespezifische Daten an die Zentraleinheit (6) zu übertragen,
wobei die Zentraleinheit (6) dazu eingerichtet ist,
b) den gebäudespezifischen Daten ein für das Gebäude (4) vorgesehenes Leistungsverzeichnis, welches auf dem zentralen Speichermedium (22z) der Zentraleinheit vorhanden ist, zuzuordnen,
c) das Leistungsverzeichnis an das erste Benutzerendgerät (8) zu übertragen,
wobei das erste Benutzerendgerät (8) dazu eingerichtet ist,
d) das Leistungsverzeichnis auf dem ersten Speichermedium (22a) abzuspeichern,
und insbesondere
e) das Bearbeitungsprotokoll an die Zentraleinheit (6) zu übertragen,
wobei die Zentraleinheit (6) dazu eingerichtet ist,
f) das Bearbeitungsprotokoll auf dem zentralen Speichermedium (22z) der Zentraleinheit (6) zu speichern,
g) das Bearbeitungsprotokoll an das zweite Benutzerendgerät (24, 26) zu übertragen.

15. System (2) nach einem der Ansprüche 12 bis 14, **dadurch gekennzeichnet, dass** das zweite Benutzerendgerät ein zweites mobiles Benutzerendgerät (24) oder eine in dem Gebäude (4) oder dem Gebäudeabschnitt vorgesehene stationäre Servicestation (26) ist.

16. System (2) nach einem der Ansprüche 12 bis 15, **dadurch gekennzeichnet, dass** an oder in dem Gebäude (4) oder dem Gebäudeabschnitt ein maschinenlesbares Kennzeichnungsmerkmal (10) vorgesehen ist, welches gebäudespezifische Daten zur Identifizierung des Gebäudes (4) oder Gebäudeabschnitts umfasst, wobei das erste Benutzerendgerät (8) dazu eingerichtet ist, das Kennzeichnungsmerkmal (10) zu erfassen und die gebäudespezifischen Daten auszulesen, wobei das erste Benutzerendgerät (8) ferner dazu eingerichtet ist, einen ersten Zeitpunkt dieser ersten Erfassung des Kennzeichnungsmerkmals (10) durch das erste Benutzerendgerät (8) zu erfassen und auf einem ersten Speichermedium (22a) des ersten Benutzerendgeräts (8) abzuspeichern, und wobei das erste Benutzerendgerät ferner dazu eingerichtet ist, das Kennzeichnungsmerkmal (10) nach Empfang der Benutzereingaben an dem ersten Benutzerendgerät (8) erneut zu erfassen und auszulesen, wobei das erste Benutzerendgerät (8) dazu eingerichtet ist, einen zweiten Zeitpunkt der erneuten Erfassung des Kennzeichnungsmerkmals (10) in dem ersten Speichermedium (22a) abzuspeichern, und wobei das erste Benutzerendgerät (8) dazu eingerichtet ist, erste Daten betreffend den ersten Zeitpunkt, insbesondere eine erste Uhrzeit und ein erstes Datum des ersten Zeitpunkts, und zweite Daten betreffend den zweiten Zeitpunkt, insbesondere eine zweite Uhrzeit und ein zweites Datum des zweiten Zeitpunkts, an die Zentraleinheit (6) zu übertragen.

17. System nach Anspruch 12, **dadurch gekennzeichnet, dass** das zweite Benutzerendgerät (24, 26) dazu eingerichtet ist, Benutzerkenndaten im Rahmen eines personalisierten Logout-Vorgangs, insbesondere zum Zweck einer Arbeitszeiterfassung, zu empfangen, und wobei das zweite Benutzerendgerät dazu eingerichtet ist, den Logout-Vorgang dann erfolgreich zu bestätigen und abzuschließen, wenn eine benutzerseitige Eingabe, betreffend eine Erledigung der in dem Bearbeitungsprotokoll vorhandenen Servicedienstleistungseinträge empfangen wird.

18. System (30) nach einem der Ansprüche 12 bis 17, **dadurch gekennzeichnet, dass** eine Basisstation (32) und eine mobile Serviceassistenzeinheit vorgesehen sind, wobei die Serviceassistenzeinheit eine Positionserfassungseinheit, insbesondere einen GPS-Empfänger (36), eine Kommunikationseinheit (38) und ein Speichermedium umfasst, und wobei die Basisstation (32) eine Kommunikationseinheit (38) und ein Speichermedium (40) umfasst, wobei die Kommunikationseinheit (38) der Basisstation (32) und der Serviceassistenzeinheit jeweils dazu eingerichtet sind, zumindest zeitweise eine Datenverbindung (42) zwischen der Serviceassistenzeinheit und der Basisstation (32) bereitzustellen, wobei die Positionserfassungseinheit der Serviceassistenzeinheit dazu eingerichtet ist, zeitabhängig Ortsdaten der Serviceassistenzeinheit zu erfassen und die erfassten Ortsdaten einschließlich der zugehörigen Zeitdaten abzuspeichern und insbesondere zeitversetzt an die Basisstation (32) zu senden, und wobei die Basisstation (32) und/oder die Serviceassistenzeinheit dazu eingerichtet sind, einen Stand-by-Zustand der Serviceassistenzeinheit zu erkennen, Benutzerkenndaten im Rahmen eines personalisierten Login-Vorgangs, insbesondere zum Zweck einer Arbeitszeiterfassung, zu empfangen, und den Login-Vorgang nur dann als erfolgreich zu bestätigen und abzuschließen, wenn ein Stand-by-Zustand der Serviceassistenzeinheit beendet und die Serviceassistenzeinheit zur Erfassung von Ortsdaten und zugehörigen Zeitdaten aktiviert wird.

19. System nach einem der Ansprüche 12 bis 18, **dadurch gekennzeichnet, dass** eine Basisstation (32) und ein, insbesondere handgeführtes, Reinigungsgerät (34), vorgesehen sind, wobei das Reinigungsgerät (34) eine Positionserfassungseinheit, insbesondere einen GPS-Empfänger (36), eine Kommunikationseinheit (38) und ein Speichermedium umfasst, und wobei die Basisstation (32) eine Kommunikationseinheit (38) und ein Speichermedium (40) umfasst, wobei die Kommunikationseinheit (38) der Basisstation (32) und der Serviceassistenzeinheit jeweils dazu eingerichtet sind, zumindest zeitweise eine Datenverbindung (42) zwischen der Serviceassistenzeinheit und der Basisstation (32) bereitzustellen, wobei die Positionserfassungseinheit des Reinigungsgeräts (34) dazu eingerichtet ist, zeitabhängig Ortsdaten des Reinigungsgeräts (34) zu erfassen und abzuspeichern und die erfassten Ortsdaten einschließlich der zugehörigen Zeitdaten an die Basisstation (32), insbesondere zeitverzögert, zu senden.

20. Computerprogrammprodukt mit einem Computerprogramm, das Softwaremittel zur Durchführung eines Verfahrens nach einem der Ansprüche 1 bis 11 aufweist, wenn das Computerprogramm in einem System (2, 30) zur Qualitätssicherung von Servicedienstleistungen ausgeführt wird.
